(19) Europäisches Patentamt
European Patent Office
Office européen des brevets

(11) **EP 3 333 660 B1**

(12) **EUROPEAN PATENT SPECIFICATION**

(45) Date of publication and mention
of the grant of the patent:
**06.10.2021 Bulletin 2021/40**

(21) Application number: **16833062.9**

(22) Date of filing: **03.08.2016**

(51) Int Cl.:
**G05B 23/02** *(2006.01)*

(86) International application number:
**PCT/JP2016/072715**

(87) International publication number:
**WO 2017/022783 (09.02.2017 Gazette 2017/06)**

(54) **ABNORMALITY PREDICTOR DIAGNOSIS SYSTEM AND ABNORMALITY PREDICTOR DIAGNOSIS METHOD**

ANOMALIEPRÄDIKTORDIAGNOSESYSTEM UND ANOMALIEPRÄDIKTORDIAGNOSEVERFAHREN

SYSTÈME DE DIAGNOSTIC DE PRÉDICTEUR D'ANOMALIES ET PROCÉDÉ DE DIAGNOSTIC DE PRÉDICTEUR D'ANOMALIES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2015 JP 2015155488**

(43) Date of publication of application:
**13.06.2018 Bulletin 2018/24**

(73) Proprietor: **Hitachi Power Solutions Co., Ltd.
Hitachi-shi, Ibaraki 317-0073 (JP)**

(72) Inventors:
• **NODA, Toujirou
Hitachi-shi, Ibaraki 317-0073 (JP)**
• **YOSHIZAWA, Takashi
Hitachi-shi, Ibaraki 317-0073 (JP)**
• **MIYABE, Shouzou
Hitachi-shi, Ibaraki 317-0073 (JP)**

(74) Representative: **Strehl Schübel-Hopf & Partner
Maximilianstrasse 54
80538 München (DE)**

(56) References cited:
JP-A- H08 263 134      JP-A- 2006 073 602
JP-B1- 5 684 941       JP-B1- 5 715 288
US-A1- 2012 084 030    US-A1- 2014 039 834
US-A1- 2015 160 098

EP 3 333 660 B1

**Description**

**TECHNICAL FIELD**

The present invention relates to an abnormality predictor diagnosis system that diagnoses a mechanical facility for the presence of an abnormality predictor.

**BACKGROUND ART**

A technique is known that diagnoses a mechanical facility for the presence of an abnormality predictor based on detection values of a sensor installed in the mechanical facility.

US 2015/0160098 A1 discloses a system that converts sensor data from a mechanical system into feature vectors, clusters normal feature vectors, and determines a fault measure of an observed state from the length of a vector from the centroid of a cluster to the feature vector of the observed state. Patent Literature 1 describes an abnormality predictor diagnosis device that divides an operation schedule of a mechanical facility into multiple time slots, learns a cluster which indicates a normal range of the mechanical facility by clustering time-series data for each time slot, and diagnoses the mechanical facility for the presence of an abnormality predictor based on the cluster.

Also, Patent Literature 2 describes a plant monitoring device that obtains image data as learning data with 15-minute intervals, the image data indicating a temperature distribution of a plant to be monitored, learns a normal pattern of a temperature change using a neural network based on the learning data, and further identifies the presence or absence of abnormality of the plant to be monitored, based on the normal pattern.

**CITATION LIST**

**Patent Literature**

Patent Literature 1: Japanese Patent No. 5684941
Patent Literature 2: Japanese Unexamined Patent Application Publication No. H6-259678

Further, US 2015/160098 A1 discloses a diagnosis system from which the pre-characterising part of claim 1 starts out.

**SUMMARY OF INVENTION**

**Technical Problem**

With the technique described in Patent Literature 1, clusters are collectively learned in each time slot included in the multiple time slots. Therefore, for instance, in one time slot, when time-series data has a rapidly varying waveform with a size in a predetermined range, or time-series data has a gently varying waveform with a size in the predetermined range, these are not distinguished, and diagnosis of "abnormal predictor is not present" may be made.

However, particularly, in a chemical plant and a pharmaceutical plant, importance is placed on the waveform in addition to the size of time-series data. This is because the waveform of time-series data reflects the process of a chemical reaction and a reaction rate. When one of the two types of waveforms (rapidly varying, gently varying) is diagnosed as "abnormality predictor is not present", the other type should be diagnosed as "abnormality predictor is present". Therefore, the technique described in Patent Literature 1 has more room for improvement in diagnostic accuracy.

Also, with the technique described in Patent Literature 2, as described above, a normal pattern is learned based on the image data obtained with 15-minute intervals. However, the temperature distribution of a plant to be monitored varies every moment, and when the time-series waveform is attempted to be reflected in a normal pattern accurately, the amount of computation in a neural network becomes huge. Therefore, the technique described in Patent Literature 2 also has more room for improvement in diagnostic accuracy.

Thus, it is an object of the present invention to provide an abnormality predictor diagnosis system capable of diagnosing a mechanical facility for the presence of an abnormality predictor with high accuracy.

**Solution to Problem**

The invention solving the above problem is defined by the appended claims.

**Advantageous Effects of Invention**

According to the present invention, it is possible to provide an abnormality predictor diagnosis system that diagnoses a mechanical facility for the presence of an abnormality predictor with high accuracy.

**BRIEF DESCRIPTION OF DRAWINGS**

FIG. 1 is a configuration diagram of an abnormality predictor diagnosis system according to a first embodiment of the present invention.

FIG. 2 is a waveform diagram illustrating a change in detection values of a sensor.

FIG. 3 is a configuration diagram of a data mining means included in the abnormality predictor diagnosis system.

FIG. 4 is an explanatory diagram related to feature points of the waveform of sensor data.

FIG. 5 is an explanatory diagram of data stored in a feature point storage unit.

FIG. 6 is an explanatory diagram of a cluster learned by a cluster learning unit.

FIG. 7 is a flowchart illustrating the processing of the abnormality predictor diagnosis system.

FIG. 8 is a flowchart of learning processing executed by a learning means.

FIG. 9 is a flowchart of diagnostic processing executed by a diagnosis means.

FIG. 10A is a waveform diagram of sensor data at a normal time and at the time of occurrence of an abnormality predictor of a mechanical facility, and FIG. 10B is another example of a waveform diagram of sensor data at a normal time and at the time of occurrence of an abnormality predictor of a mechanical facility.

FIG. 11 is a configuration diagram of a data mining means included in an abnormality predictor diagnosis system according to a second embodiment of the present invention.

FIG. 12 is an explanatory diagram illustrating a relationship between feature points and clusters.

FIG. 13 is a flowchart of learning processing executed by a learning means.

FIG. 14 is a flowchart of diagnostic processing executed by a diagnosis means.

FIG. 15A is experimental data indicating a time-series change of detection values of a sensor at a normal time and at the time of occurrence of an abnormality predictor of a mechanical facility, and FIG. 15B is another experimental data indicating a time-series change of detection values of a sensor at a normal time and at the time of occurrence of an abnormality predictor of a mechanical facility.

FIG. 16 is a configuration diagram of a data mining means included in an abnormality predictor diagnosis system according to a third embodiment of the present invention.

FIG. 17 is an explanatory diagram related to detection values of a sensor, and the line represented by a linear function.

FIG. 18 is a flowchart of learning processing executed by a learning means.

FIG. 19 is a flowchart of diagnostic processing executed by a diagnosis means.

FIG. 20A is an explanatory diagram illustrating the waveform of learning target data, and the line of a linear function, and FIG. 20B is an explanatory diagram illustrating the waveform of diagnosis target data, and the line of a linear function at the time of occurrence of an abnormality predictor of a mechanical facility.

FIG. 21 is an explanatory diagram of clusters which are results of learning, and feature vectors of diagnosis target data.

FIG. 22A is an explanatory diagram illustrating another example of the waveform of learning target data, and the line of a linear function, and FIG. 22B is an explanatory diagram illustrating the waveform of diagnosis target data, and the line of a linear function at the time of occurrence of an abnormality predictor of a mechanical facility.

FIG. 23 is an explanatory diagram of clusters which are results of learning, and feature vectors of diagnosis target data.

**DESCRIPTION OF EMBODIMENTS**

<<First Embodiment>>

<Configuration of Abnormality Predictor Diagnosis System>

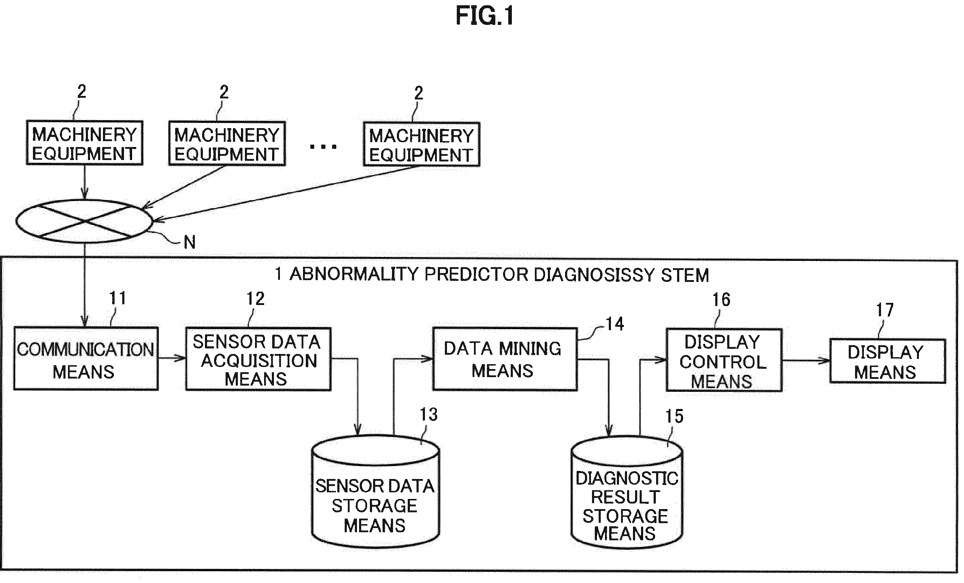

FIG. 1 is a configuration diagram of an abnormality predictor diagnosis system 1 according to a first embodiment.

The abnormality predictor diagnosis system 1 is a system that diagnoses a mechanical facility 2 for the presence of an abnormality predictor based on sensor data including detection values of a sensor (not illustrated) installed in the mechanical facility 2. The above-mentioned "abnormality predictor" is a precursor to an occurrence of abnormality of the mechanical facility 2, and "abnormality predictor diagnosis" is to diagnose for the presence of an abnormality predictor.

Hereinafter the mechanical facility 2 will be briefly described before a description of the abnormality predictor diagnosis system 1 is given. The mechanical facility 2 is, for instance, a chemical plant, and includes a reactor, and a device (not illustrated) that loads chemical substances to the reactor. Then, a predetermined "operation process" is repeated in the mechanical facility 2, thus predetermined chemical substances are generated in each process. It is to be noted that the type of the mechanical facility 2 is not limited to this, and may be a pharmaceutical plant, a production line, a gas engine, a gas turbine, a power generation facility, a medical facility, or a communication facility.

In the mechanical facility 2, a sensor (not illustrated) which detects predetermined physical quantities (such as a temperature, a pressure, a flow rate, a current, a voltage) is installed. A physical quantity detected by the sensor is transmitted to the abnormality predictor diagnosis system 1 as sensor data via a network N. It is to be noted that in addition to a detection value of the sensor, and the date and time on which the physical quantity is detected, the sensor data also includes identification information of the mechanical facility 2, identification information of the sensor, and a signal indicating the start and end of an "operation process" which is repeated in the mechanical facility 2.

Hereinafter, as an example, the configuration of diagnosis of the mechanical facility 2 for the presence of an abnormality predictor based on the detection values of a sensor will be described, the sensor being one of multiple sensors installed in the mechanical facility 2 and sensitively reflecting an abnormality predictor of the mechanical facility 2.

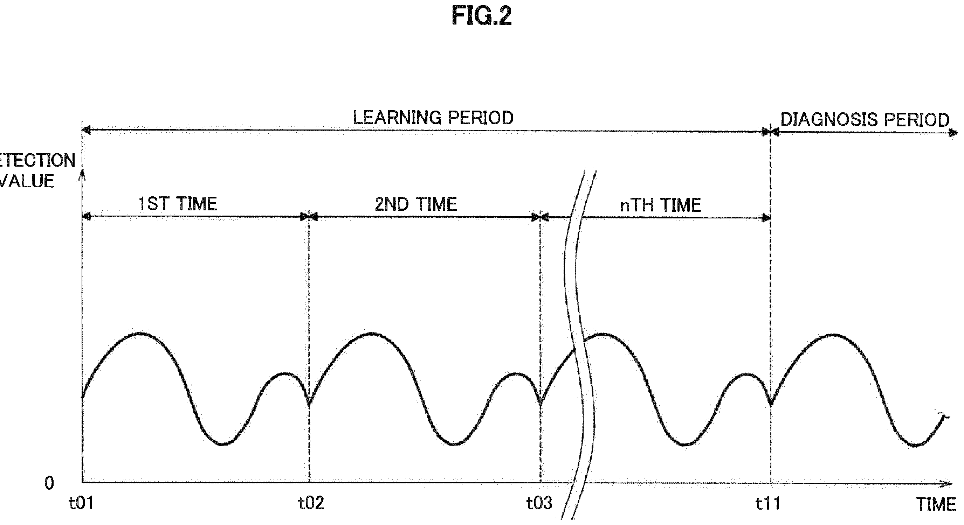

FIG. 2 is a waveform diagram illustrating a change in the detection values of the sensor. It is to be noted that the horizontal axis of FIG. 2 indicates time and the vertical axis indicates detection value of the sensor (not illustrated) installed in the mechanical facility 2.

In the example illustrated in FIG. 2, the 1st time operation process is executed in the mechanical facility 2 in the time slot from time t01 to time t02, and the 2nd time operation process is executed in the time slot from time t02 to time t03. Since the operation process is repeated in this manner, when the mechanical facility 2 is normal, the detection values of the sensor in the operation processes have a similar (that is, quite analogous) waveform.

In this embodiment, a time-series waveform (a waveform of each operation process) of sensor data is learned as a normal model based on the sensor data obtained in a predetermined learning period (see FIG. 2) in which the mechanical facility 2 is known to be normal, and the presence of an abnormality predictor of the mechanical facility 2 is determined based on the normal model. The details of the normal model will be described later.

<Configuration of Abnormality Predictor Diagnosis System>

As illustrated in FIG. 1, the abnormality predictor diagnosis system 1 includes a communication means 11, a sensor data acquisition means 12, a sensor data storage means 13, a data mining means 14, a diagnostic result storage means 15, a display control means 16, and a display means 17.

The communication means 11 receives information including sensor data from the mechanical facility 2 via a network N. For instance, a router which receives information in accordance with a communication protocol of TCP/IP can be used as the communication means 11.

The sensor data acquisition means 12 acquires the sensor data included in the information received by the communication means 11 via the network N, and stores the acquired sensor data in the sensor data storage means 13.

In the sensor data storage means 13, the sensor data acquired by the sensor data acquisition means 12 is stored, for instance, as a database. It is to be noted that a magnetic disk device, an optical disk device, a semiconductor memory device and the like may be used as the sensor data storage means 13.

The data mining means 14 learns a normal model of the waveform of detection values of the sensor by data mining that is a statistical data classification technique, and diagnoses the mechanical facility 2 for the presence of an abnormality predictor based on the normal model. The details of the data mining means 14 will be described later.

In the diagnostic result storage means 15, a diagnostic result of the data mining means 14 is stored. The above-mentioned diagnostic result includes identification information of the mechanical facility 2, and the presence or absence of an abnormality predictor of the mechanical facility 2.

The display control means 16 outputs to the display means 17 a control signal for displaying the diagnostic result of the data mining means 14. For instance, the display control means 16 displays a diagnostic result on the display means 17 in a matrix format with a row indicating the name of each a mechanical facility 2 and a column indicating the date of diagnosis.

The display means 17 is, for instance, a liquid crystal display, and displays a diagnostic result in accordance with the control signal inputted from the display control means 16.

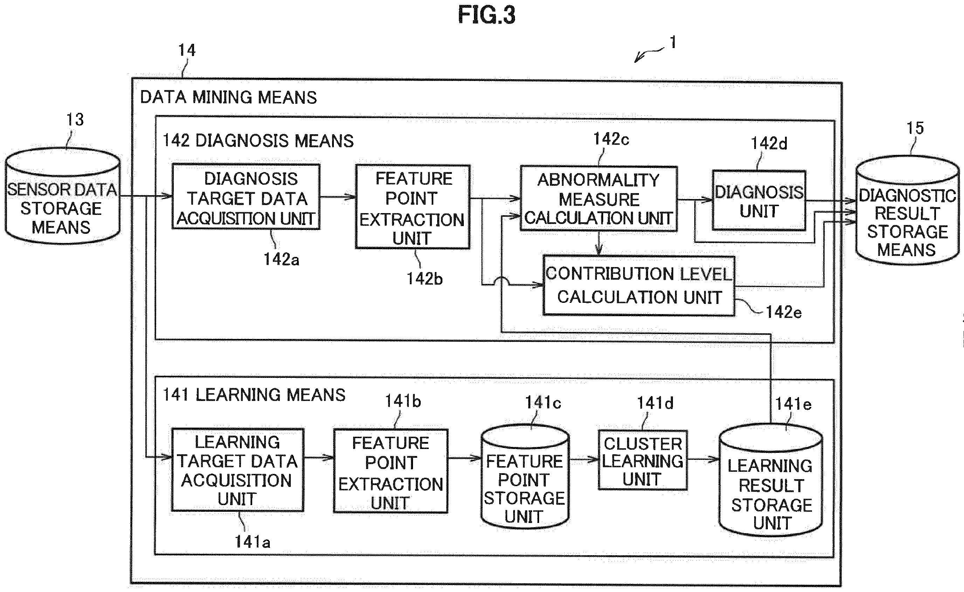

FIG. 3 is a configuration diagram of the data mining means 14 included in the abnormality predictor diagnosis system 1.

As illustrated in FIG. 3, the data mining means 14 includes a learning means 141 and a diagnosis means 142. The learning means 141 learns a normal waveform of detection values of a sensor (not illustrated) as a normal model by clustering that is one of the techniques of data mining.

As illustrated in FIG. 3, the learning means 141 includes a learning target data acquisition unit 141a, a feature point extraction unit 141b, a feature point storage unit 141c, a cluster learning unit 141d, and a learning result storage unit 141e.

The learning target data acquisition unit 141a acquires sensor data (that is, learning target data) which is a learning target from the sensor data storage means 13. Specifically, the learning target data acquisition unit 141a acquires sensor data for each operation process of the mechanical facility 2, the sensor data being acquired in a predetermined learning period (see FIG. 2) in which the mechanical facility 2 is known to be normal.

The feature point extraction unit 141b extracts a "feature point" of the time-series waveform of the sensor data. The "feature point" includes points of the start time and end time of each operation process, in addition to a local maximum point and a local minimum point of the time-series waveform of the sensor data. A local maximum point and a local minimum point are also collectively called an "extremum point".

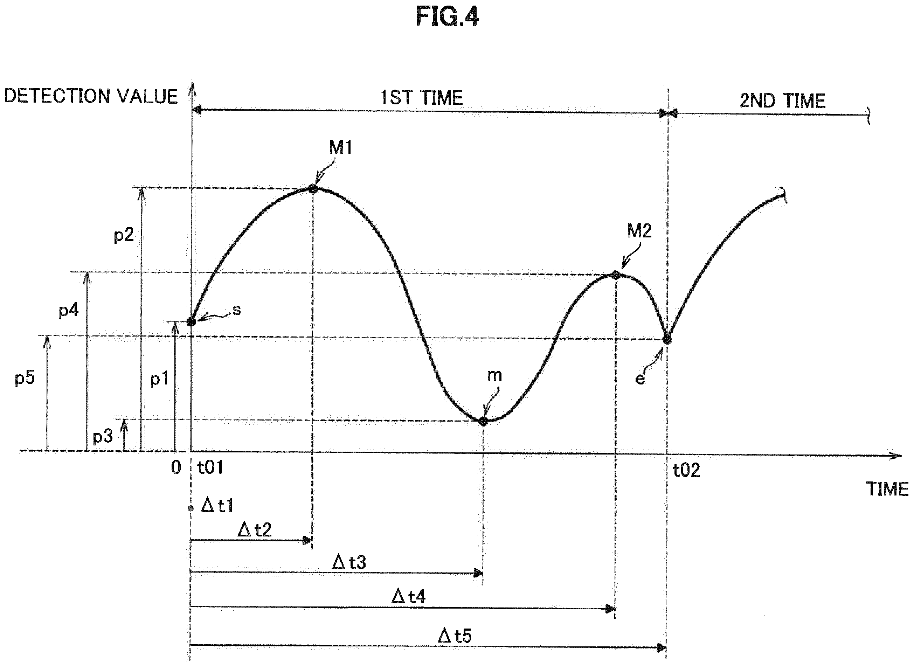

FIG. 4 is an explanatory diagram related to feature points of the waveform of sensor data. FIG. 4 illustrates the detection value of the sensor in the 1st time operation process illustrated in FIG. 2.

The feature point extraction unit 141b (see FIG. 3) identifies local maximum points M1, M2, and a local minimum point m of the waveform of the detection value as well as a start point s which is the start time of the 1st time operation process, and an end point e which is the end time of the 1st time operation process. For each of the start point s, the local maximum point M1, the local minimum point m, the local maximum point M2, and the end point e, the feature point extraction unit 141b identifies the detection value of the sensor, and an elapsed time from the time t01 at which the operation process has started. In other words, the feature point extraction unit 141b identifies detection values p1 to p5 illustrated in FIG. 4, and elapsed times $\Delta t1$ to $\Delta t5$.

As described above, the sensor data also includes a signal indicating the start and end of the operation process. The feature point extraction unit 141b (see FIG. 3) identifies the start point s and the end point e based on the signal. Also, the local maximum points M1, M2, and the local minimum point m are identified based on the change rate of each detection value that changes every moment. That is, a point, at which the change rate of the detection value of the sensor shifts from a positive to a negative, should be a local maximum point, and a point, at which the change rate shifts from a negative to a positive, should be a local minimum point.

The feature point extraction unit 141b (see FIG. 3) stores the detection values p1 to p5 and the elapsed times $\Delta t1$ to $\Delta t5$ in five feature points illustrated in FIG. 4 in the feature point storage unit 141c as a group of waveform data (data having 10-dimensional vector). The above-mentioned waveform data is a group of data indicating a normal waveform of the sensor data. The feature point extraction unit 141b extracts feature points similarly for the 2nd to nth time operation processes included in the learning period (see FIG. 2), and stores the feature points in the feature point storage unit 141c as the waveform data (detection values of the sensor, and elapsed times from the start time of the operation process).

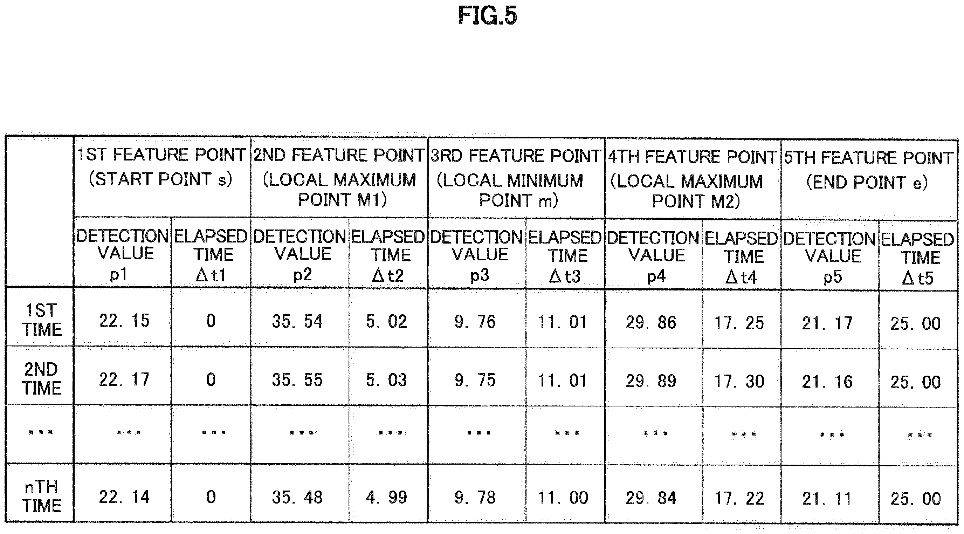

FIG. 5 is an explanatory diagram of data stored in the feature point storage unit 141c. It is to be noted that in FIG. 5, the start point s (see FIG. 4) which is the start time of an operation process is referred to as "the 1st feature point". Similarly, the local maximum point M1, the local minimum point m, the local maximum point M2, and the end point e are referred to as "the 2nd feature point", "the 3rd feature point", "the 4th feature point", "the 5th feature point".

In the feature point storage unit 141c, the waveform data is stored as a database. The waveform data (see the left end column in FIG. 5) of the 1st time operation process includes the detection values p1 to p5 (see FIG. 4), and the elapsed times $\Delta t1$ to $\Delta t5$ (see FIG. 4). The block of these pieces of waveform data is used in the cluster learning unit 141d (see FIG. 3) described subsequently when a 10-dimensional feature vector is generated. The same goes with the 2nd to nth time operation processes included in the learning period (see FIG. 2).

The cluster learning unit 141d illustrated in FIG. 3 converts the above-mentioned waveform data into a feature vector, and clusters each feature vector, thereby learning a cluster that indicates a normal waveform of detection values of the sensor.

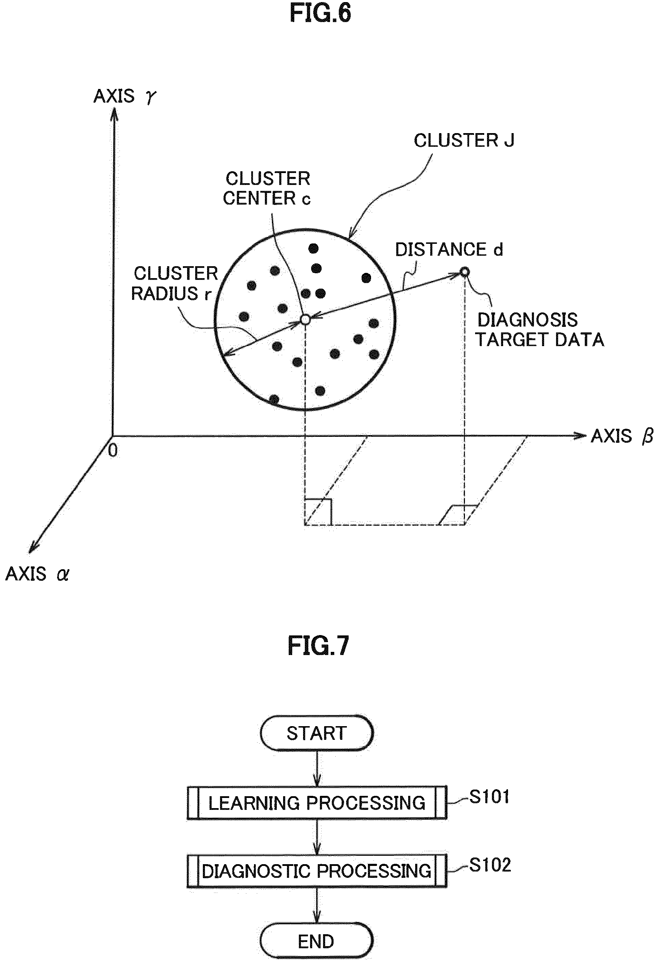

FIG. 6 is an explanatory diagram of a cluster learned by the cluster learning unit 141d.

A cluster J illustrated in FIG. 6 is the area identified by a cluster center c and a cluster radius r in a multi-dimensional vector space, and is learned based on the sensor data acquired in the learning period (see FIG. 2) .

For instance, the time-series waveform of detection values of the sensor in the 1st time operation process is represented by a feature vector with component values obtained by performing normalization processing on the detection values p1 to p5 of the sensor and the elapsed times $\Delta t1$ to $\Delta t5$ from the start time of the operation process. Here, the "normalization processing" is processing that divides the detection values and elapsed times by representative values (such as an average value, a standard deviation) to convert the values and elapsed times to dimensionless quantities to allow comparison between the quantities.

Each ●symbol (n symbols are present) illustrated in FIG. 6 is a feature vector, and corresponds to the waveform of the detection values of the sensor in one of the 1st to nth time operation processes (see FIG. 2). Although a feature vector (●symbol) is illustrated in a three-dimensional vector space in FIG. 6, the waveform of the detection values of the sensor is actually represented by a 10-dimensional feature vector. This is because the five feature points (the start point s, the local maximum point M1, the local minimum point m, the local maximum point M2, and the end point e) illustrated in FIG. 4 are each identified by a detection value of the sensor and an elapsed time. In other words, (the number of feature points)$\times 2$ is the number of dimensions of a feature vector that represents a normal waveform.

As described above, a predetermined operation process is repeated in the mechanical facility 2, and thus the sensor data in operation processes (that is, detection values acquired in time-series) provides similar waveforms (see FIG. 2). Therefore, when the mechanical facility 2 is normal, the feature vectors indicating waveforms are often densely spaced.

The cluster learning unit 141d (see FIG. 3) classifies n feature vectors indicated by ● symbols of FIG. 6 into groups called clusters. Hereinafter, as an example, a case will be described where a cluster is learned by using k-means method which is non-hierarchical clustering. The cluster learning unit 141d first assigns a cluster to each feature vector at random, and calculates the center (the cluster center c, see FIG. 6) of each assigned cluster. The cluster center c is, for instance, the centroid of multiple feature vectors belonging to a cluster.

Subsequently, the cluster learning unit 141d determines the distance between a predetermined feature vector and each cluster center c, and reassigns the feature vector to a cluster with the shortest distance. The cluster learning unit 141d executes such processing on all feature vectors. When assignment of clusters is not changed, the cluster learning unit 141d completes cluster generation processing, or otherwise recalculates the cluster center c from a newly assigned cluster.

The cluster learning unit 141d then calculates the coordinate values of the cluster center c (see FIG. 6), and the cluster radius r (see FIG. 6) for each cluster. The cluster radius r is, for instance, the average value of the distances between the cluster center c and the feature vectors belonging to the cluster. The method of calculating the cluster radius r is not limited to this. For instance, a feature vector farthest from the cluster center c among the feature vectors belonging to the cluster is identified, and the distance between the feature vector and the cluster center c may be the cluster radius r. In this manner, the cluster learning unit 141d learns the cluster J (see FIG. 6) as a normal model representing the waveform of the detection values of the sensor.

Although a case is illustrated in FIG. 6 where one cluster J is generated as a result of learning, multiple clusters may be generated. The cluster learning unit 141d stores cluster information on the generated cluster in the learning result storage unit 141e (see FIG. 3).

In the learning result storage unit 141e illustrated in FIG. 3, the cluster information, which is the result of learning by the cluster learning unit 141d, is stored as a database. The cluster information includes the cluster center c (see FIG. 6), the cluster radius r (see FIG. 6), and identification information of the mechanical facility 2.

The diagnosis means 142 diagnoses the mechanical facility 2 for the presence of an abnormality predictor based on comparison between the cluster (normal model) learned by the learning means 141, and the time-series waveform of the diagnosis target sensor data. As illustrated in FIG. 3, the diagnosis means 142 includes a diagnosis target data acquisition unit 142a, a feature point extraction unit 142b, an abnormality measure calculation unit 142c, a diagnosis unit 142d, and a contribution level calculation unit 142e.

The diagnosis target data acquisition unit 142a acquires the diagnosis target sensor data (that is, the diagnosis target data) from the sensor data storage means 13. That is, the diagnosis target data acquisition unit 142a acquires sensor data acquired in the diagnosis period (see FIG. 2) after the learning period is completed, for each operation process repeated in the mechanical facility 2.

The feature point extraction unit 142b extracts a feature point of the diagnosis target data. That is, the feature point extraction unit 142b extracts a start point, a local maximum point, a local minimum point, and an end point included in the time-series waveform of the diagnosis target data as the feature points. It is to be noted that the method of extracting a feature point is the same as the processing performed by the feature point extraction unit 141b included in the learning means 141. The feature point extraction unit 142b outputs information on the extracted feature points (specifically, the detection values p1 to p5 which provide the feature points, and the elapsed times $\Delta t1$ to $\Delta t5$: see FIG. 4) to the abnormality measure calculation unit 142c and the contribution level calculation unit 142e as the waveform data indicating the diagnosis target data.

The abnormality measure calculation unit 142c calculates an abnormality measure u which indicates a degree of abnormality, based on the cluster information stored in the learning result storage unit 141e, and the waveform data inputted from the feature point extraction unit 142b. Specifically, the abnormality measure calculation unit 142c performs normalization processing on the detection values and the elapsed times included in the waveform data to convert the detection values and the elapsed times to feature vectors. As described above, the number of dimensions of a feature vector is (the number of feature points)$\times 2$. The abnormality measure calculation unit 142c reads cluster information (that is, a normal model) from the learning result storage unit 141e, and calculates an abnormality measure u of the diagnosis target data based on comparison between the cluster information and the above-described feature vector.

More specifically, the abnormality measure calculation unit 142c identifies a cluster, among the clusters, having a cluster center c (see FIG. 6) closest to the feature vector of the diagnosis target data. Furthermore, the abnormality measure calculation unit 142c determines a distance d (see FIG. 6) between the cluster center c of the identified cluster and the feature vector of the diagnosis target data. The abnormality measure calculation unit 142c then calculates an abnormality measure u based on the following (Expression 1), the abnormality measure u being ratio of the above-mentioned distance d to the cluster radius r (the cluster radius of a cluster closest to the feature vector).

$$u = d/r \quad \ldots \quad \text{(Expression 1)}$$

The abnormality measure calculation unit 142c outputs the calculated abnormality measure u to the diagnosis unit 142d, and outputs the distance d to the contribution level calculation unit 142e. The abnormality measure calculation unit 142c stores the diagnosis target data and abnormality measure u in association with each other in the diagnostic result storage means 15.

The diagnosis unit 142d diagnoses the mechanical facility 2 for the presence of an abnormality predictor based on the abnormality measure u inputted from the abnormality measure calculation unit 142c. As an example, when the abnormality measure $u \leq 1$, the diagnosis target data is present in the cluster (that is, within the normal range), and thus the diagnosis unit 142d diagnoses the mechanical facility 2 as "abnormality predictor is not present". On the other hand, when the abnormality measure $u > 1$, the diagnosis target data is present outside the cluster (that is, outside the normal range), and thus the diagnosis unit 142d diagnoses the mechanical facility 2 as "abnormality predictor is present". The diagnosis unit 142d stores a result of the diagnosis in the diagnostic result storage means 15 in association with the diagnosis target data.

The contribution level calculation unit 142e calculates a contribution level for each of the detection values p1 to p5, and the elapsed times $\Delta t1$ to $\Delta t5$ that provide the five feature points (the start point s, the local maximum point M1, the local minimum point m, the local maximum point M2, and the end point e illustrated in FIG. 4). The "contribution level "is a numerical value that indicates a level of contribution of the detection values and the elapsed times in the diagnosis target data to the abnormality measure u. For instance, let $f_1$ to $f_{10}$ be normalized values of the detection values and the elapsed times of the five feature points, then contribution level $i_k$ of $f_k$ ($k = 1, 2,\ldots , 10$) is expressed by the following (Expression 2).

$$i_k = f_k/d \quad \ldots \quad \text{(Expression 2)}$$

The contribution level $i_k$ is calculated in this manner, and when an abnormality predictor occurs, it is possible to recognize the magnitude of each detection value is too large or too small, or the manner (waveform) of the change is abnormal or not. For instance, when the contribution levels $i_1$ to $i_5$ corresponding to the detection values p1 to p5 are relatively high, a user can recognize that the detection value of the sensor is too large or too small.

For instance, when the contribution levels $i_6$ to $i_{10}$ corresponding to the elapsed times $\Delta t1$ to $\Delta t5$ are relatively high, a user can recognize that the manner of the change is rapid or gentle compared with a normal time.

For instance, when the contribution levels $i_6$ corresponding to the elapsed time $\Delta t1$ is relatively high, a user can recognize that an abnormality predictor has occurred (that is, timing of occurrence of abnormality predictor) when $\Delta t1$ has elapsed since the start of the operation process.

The contribution level calculation unit 142e stores the calculated contribution level $i_k$ in the diagnostic result storage means 15 in association with the diagnosis target data.

<Operation of Abnormality Predictor Diagnosis System>

FIG. 7 is a flowchart illustrating the processing of the abnormality predictor diagnosis system 1. In step S101, the abnormality predictor diagnosis system 1 executes learning processing by the learning means 141 (see FIG. 3).

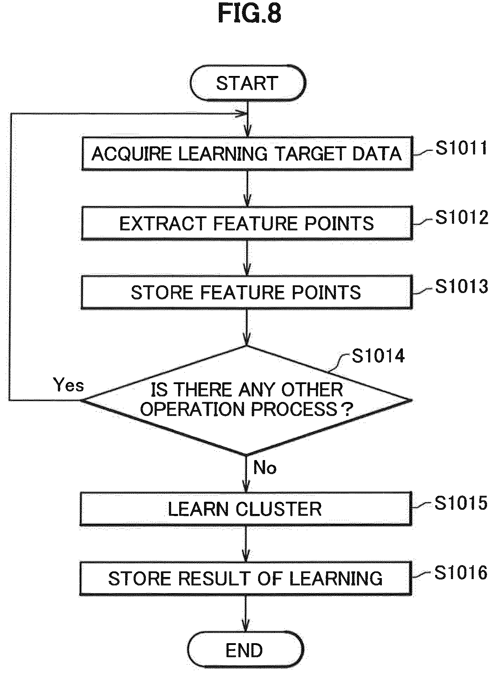

FIG. 8 is a flowchart of the learning processing executed by the learning means 141.

In step S1011, the learning means 141 acquires learning target data from the sensor data storage means 13 by the learning target data acquisition unit 141a. That is, the learning means 141 acquires sensor data in the 1st time operation process as the learning target out of the sensor data acquired in a predetermined learning period (see FIG. 2) in which the mechanical facility 2 is known to be in normal operation.

In step S1012, the learning means 141 extracts the feature points of the time-series waveform of the learning target data by the feature point extraction unit 141b. That is, learning means 141 extracts the start point s, the local maximum point M1, the local minimum point m, the local maximum point M2, and the end point e illustrated in FIG. 4, and identifies the detection values p1 to p5 and the elapsed times $\Delta t1$ to $\Delta t5$. As described above, these detection values p1 to p5 and the elapsed times $\Delta t1$ to $\Delta t5$ provide a group of waveform data that indicates a normal waveform of the sensor data. In step S1013, the learning means 141 stores the information on the feature points (in short, the waveform data) extracted in step S1012 in the feature point storage unit 141c.

In step S1014, the learning means 141 determines whether or not another operation process is present, in which a feature point has not been extracted in the learning period (see FIG. 2). When another operation process is present, in which a feature point has not been extracted (Yes in S1014), the processing of the learning means 141 returns to step S1011. On the other hand, when the feature points have been extracted for all the operation processes included in the learning period (No in S1014), the processing of the learning means 141 proceeds to step S1015.

In step S1015, the learning means 141 learns a cluster by the cluster learning unit 141d, the cluster being a normal model of the time-series waveform of the sensor data. Specifically, the learning means 141 normalizes the feature points extracted in step S1013 to convert into a feature vector, and clusters each feature vector to learn clusters.

In step S1016, the learning means 141 stores a result of the learning in step S1015. Specifically, the learning means 141 stores the cluster center c (see FIG. 6), and the cluster radius r (see FIG. 6) of each cluster in the learning result storage unit 141e. After the processing in step S1016 is performed, the learning means 141 completes a series of learning processing (END).

After the learning processing in step S101 illustrated in FIG. 7 is performed, in step S102, the abnormality predictor diagnosis system 1 executes diagnostic processing by the diagnosis means 142 (see FIG. 3).

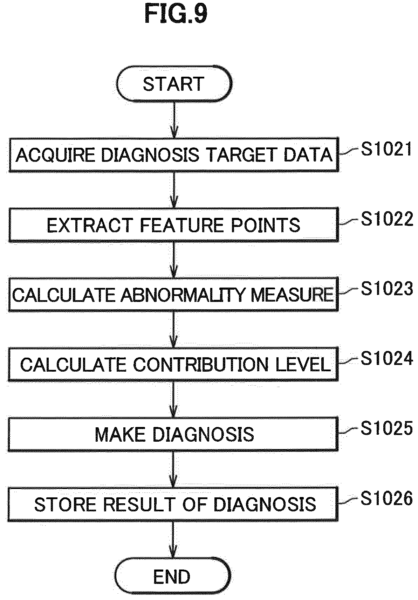

FIG. 9 is a flowchart of the diagnostic processing executed by the diagnosis means 142.

In step S1021, the diagnosis means 142 acquires the diagnosis target data from the sensor data storage means 13 by the diagnosis target data acquisition unit 142a. Specifically, the diagnosis means 142 acquires the sensor data in the 1st time operation process as a diagnosis target out of the sensor data acquired in the diagnosis period (see FIG. 2) after the learning period is completed.

In step S1022, the diagnosis means 142 extracts the feature points of the time-series waveform of the diagnosis target data by the feature point extraction unit 142b.

In step S1023, the diagnosis means 142 calculates an abnormality measure u of the diagnosis target data by the abnormality measure calculation unit 142c. Specifically, the diagnosis means 142 normalizes the diagnosis target data to convert into a feature vector, and calculates an abnormality measure u based on a cluster, among the clusters, having the cluster center c closest to the feature vector of the diagnosis target data.

In step S1024, the diagnosis means 142 calculates the contribution level $i_k$ for each of the detection values and elapsed times included in the diagnosis target data by the contribution level calculation unit 142e. Although omitted in FIG. 9, the contribution $i_k$ calculated by the contribution level calculation unit 142e is stored in the diagnostic result storage means 15, and is further displayed on the display means 17 (see FIG. 1) by the display control means 16 (see FIG. 1). This allows a user to recognize whether each detection value is too large or too small, whether the waveform of the detection value is abnormal, and also the time at which an abnormality predictor of the mechanical facility 2 has occurred.

In step S1025, the diagnosis means 142 diagnoses the mechanical facility 2 for the presence of an abnormality predictor by the diagnosis unit 142d. Specifically, the diagnosis means 142 diagnoses the mechanical facility 2 for the presence of an abnormality predictor by comparing the abnormality measure u calculated in step S1023 with a predetermined threshold value (for instance, the predetermined threshold value = 1).

In step S1026, the diagnosis means 142 stores a result of the diagnosis in step S1025 into the diagnostic result storage means 15.

The diagnosis means 142 then diagnoses the presence of an abnormality predictor similarly for the 2nd and subsequent time operation processes in the diagnosis period (see FIG. 2). It is to be noted that an abnormality measure u is calculated for multiple operation processes, and the mechanical facility 2 may be diagnosed for the presence of an abnormality predictor based on the calculation result (for instance, the number of times of occurrence in which an abnormality measure u exceeds a predetermined threshold value).

The information stored in the diagnostic result storage means 15 is displayed on the display means 17 (see FIG. 1) by the display control means 16 (see FIG. 1).


<Effects>

According to this embodiment, the feature points of the time-series waveform of the sensor data are extracted and represented by a multi-dimensional feature vector as a group of waveform data. Therefore, a normal waveform of the sensor data can be learned by clustering the above-mentioned feature vector. If a normal waveform is learned based on the sensor data for each sampling period in which a physical quantity is detected, a great quantity (for instance, tens of thousands of pieces) of sensor data is acquired in one-time operation process, and the amount of computation needed for learning clusters becomes huge. In contrast, in this embodiment, clusters are learned based on the feature points of the waveform of the sensor data, and thus a normal waveform of the sensor data can be learned by a relatively small amount of computation. Also, the waveform data indicating the waveform of the sensor data in the diagnosis period is compared with a cluster which is a result of learning, and thus the mechanical facility 2 can be diagnosed for the presence of an abnormality predictor with high accuracy.

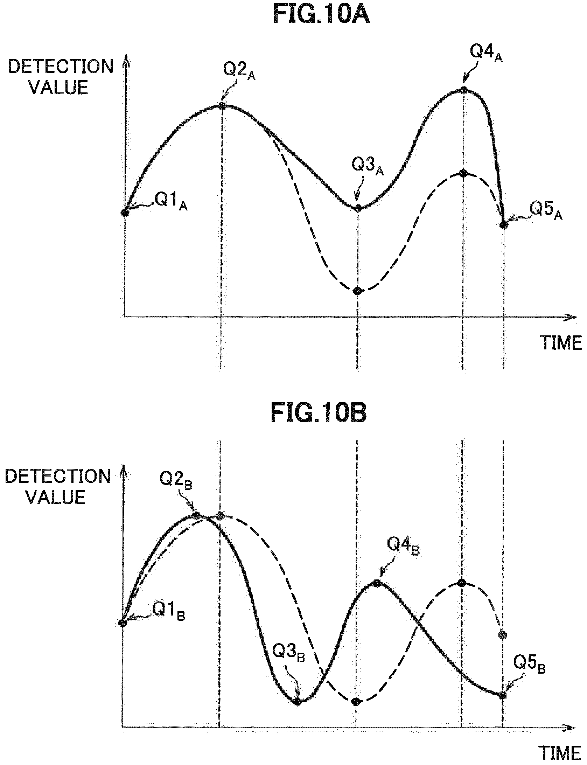

FIG. 10A is a waveform diagram of sensor data at a normal time and at the time of occurrence of abnormality predictor of the mechanical facility 2. It is to be noted that the dashed-line waveform illustrated in FIG. 10A indicates the sensor data acquired when the mechanical facility 2 is in normal operation (one-time operation process). In addition, the solid-line waveform indicates the sensor data acquired when an abnormality predictor of the mechanical facility 2 occurs (one-time operation process).

In the example illustrated in FIG. 10A, although the elapsed times from the start (time t11) of an operation process at feature points $Q1_A$ to $Q5_A$ are the same as those at a normal time (dashed line), the detection values at the feature points $Q3_A$, $Q4_A$ are greater than those at a normal time. As a result, the 10-dimensional feature vector based on the feature points $Q1_A$ to $Q5_A$ is present outside the cluster as a result of learning, and thus is diagnosed as "abnormality predictor is present" by the diagnosis unit 142d. Also, in the 10-dimensional feature vector, the contribution level of the detection values at the feature points $Q3_A$, $Q4_A$ has a relatively large value. Therefore, although the elapsed times at the feature points $Q1_A$ to $Q5_A$ are normal, a user can recognize that the sizes are abnormal.

FIG. 10B is another example of a waveform diagram of sensor data at a normal time and at the time of occurrence of abnormality predictor of the mechanical facility 2. It is to be noted that the dashed-line waveform illustrated in FIG. 10B indicates the sensor data acquired when the mechanical facility 2 is in normal operation, and the solid-line waveform indicates the sensor data acquired when an abnormality predictor of the mechanical facility 2 occurs.

In the example illustrated in FIG. 10B, although the detection values at feature points $Q1_B$ to $Q5_B$ are the same as those at a normal time (dashed line), the elapsed times from the start time of an operation process at the feature points $Q3_B$, $Q4_B$ are shorter than those at a normal time. As a result, the 10-dimensional feature vector based on the feature points $Q1_B$ to $Q5_B$ is present outside the cluster as a result of learning, and thus is diagnosed as "abnormality predictor is present" by the diagnosis unit 142d. Also, in the 10-dimensional feature vector, the contribution level of the elapsed times at the feature points $Q3_B$, $Q4_B$ has a relatively large value. Therefore, although the detection value at each of the feature points $Q3_B$, $Q4_B$ is normal, a user can recognize that the elapsed time is abnormal.

Incidentally, in a conventional abnormality predictor diagnosis, a feature vector is generated based on only the detection values of a sensor, and thus when the waveform illustrated in FIG. 10B is acquired, it is highly probable that the mechanical facility 2 is erroneously diagnosed as "abnormality predictor is not present". However, as described above, in a chemical process and a pharmaceutical process, greater importance is placed on the time-series waveform in addition to the magnitude of each detection value. According to this embodiment, when the waveform illustrated in FIG. 10B is acquired, the mechanical facility 2 can be properly diagnosed as "abnormality predictor is present" by the diagnosis unit 142d.

<<Modification of First embodiment>>

Although in the first embodiment, the configuration has been described, in which the mechanical facility 2 is diagnosed for the presence of an abnormality predictor based on the sensor data acquired from one sensor, the invention is not limited to this. Specifically, the mechanical facility 2 may be diagnosed for the presence of an abnormality predictor based on the sensor data acquired from multiple sensors. In this case, a cluster corresponding to each of the sensors is individually learned by the cluster learning unit 141d using the same method as in the first embodiment. For instance, when sensor data is acquired from three sensors, at least three clusters are learned by the cluster learning unit 141d.

A cluster corresponding to a sensor for which sensor data is acquired is identified out of multiple pieces of sensor data acquired in the diagnosis period, and the abnormality measure u is calculated based on the comparison with the cluster. It is to be noted that in one-time operation process, the abnormality measures u for the number (for instance, three) of sensors are calculated. Therefore, a user can identify the occurrence position of an abnormality predictor in the mechanical facility 2 based on the abnormality measures u displayed on the display means 17 and the installation positions of the sensors.

In the above-mentioned configuration, for instance, when one of the abnormality measures exceeds a predetermined threshold value, the diagnosis unit 142d diagnoses the mechanical facility 2 as "abnormality predictor is present". It is to be noted that a sensor which sensitively reflect an occurrence of an abnormality predictor may be identified beforehand, the abnormality measure based on the sensor may be weighted. Alternatively, for each of the sensors, a logic circuit may be constructed, which receives input of a signal indicating whether or not the abnormality measure of the sensor data exceeds a predetermined threshold value, and the presence of an abnormality predictor may be diagnosed by the logic circuit.

Alternatively, a filter (not illustrated), which attenuates the harmonics included in the time-series waveform of the sensor data, may be added to the configuration described in the first embodiment. In such a configuration, the harmonics included in the waveform of the learning target data are attenuated by the filter, and a cluster (normal model) is learned by the learning means 141 based on the waveform after being attenuated. Also, the harmonics included in the waveform of the diagnosis target data are attenuated by the filter, and the mechanical facility 2 is diagnosed for the presence of an abnormality predictor based on the waveform after being attenuated. This can reduces unnecessary extraction of many feature points by the feature point extraction units 141b, 142b.

For instance, from the extremum points (the local maximum points, the local minimum points) included in the time-series waveform of the learning target data, the feature point extraction unit 141b may extract an extremum point as a feature point, for which the absolute value of the difference between the detection value of the sensor at the extremum point, and the detection value of the sensor a predetermined time before (or a predetermined time after) the time which provides the extremum point is greater than or equal to a predetermined threshold value. The same goes for the feature point extraction unit 142d included in the diagnosis means 142. This can moderately reduce the number of feature points extracted from the waveform that varies finely. Alternatively, the above-mentioned filter (not illustrated) may be used together, and the local maximum points and the local minimum points are identified from the waveform with the harmonics attenuated by the filter, and the "feature points" may be further extracted based on the absolute value.

<<Second Embodiment>>

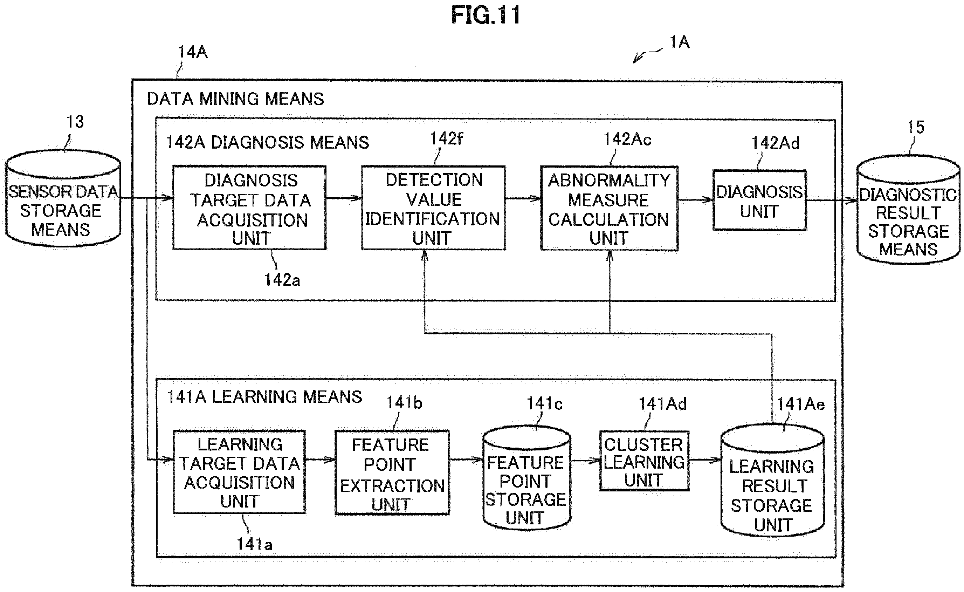

An abnormality predictor diagnosis system 1A (see FIG. 11) according to a second embodiment differs from the first embodiment in that the abnormality predictor diagnosis system 1A extracts the feature points of the waveform of sensor data, and learns clusters individually for each of the feature points. It is to be noted that the entire configuration of the abnormality predictor diagnosis system 1A is the same as that of the first embodiment (see FIG. 1). Also, similarly to the first embodiment, a predetermined operation process is repeated in the mechanical facility 2. Thus, a portion different from the first embodiment will be described, and a description of a redundant portion is omitted.

<Configuration of Abnormality Predictor Diagnosis System>

FIG. 11 is a configuration diagram of a data mining means 14A included in the abnormality predictor diagnosis system 1A according to the second embodiment.
As illustrated in FIG. 11, a learning means 141A includes a learning target data acquisition unit 141a, a feature point extraction unit 141b, a feature point storage unit 141c, a cluster learning unit 141Ad, and a learning result storage unit 141Ae.
The cluster learning unit 141Ad learns a cluster individually for each of the feature points extracted by the feature point extraction unit 141b. For instance, similarly to the first embodiment (see FIG. 4), when the start point s, the local maximum point M1, the local minimum point m, the local maximum point M2, and the end point e are extracted as the feature points in one-time operation process of the mechanical facility 2, the cluster learning unit 141Ad learns a cluster for each of the five feature points. These clusters provide a normal model that indicates the time-series waveform for the detection values of a sensor.
The learning of a cluster is specifically described: the cluster learning unit 141Ad generates a two-dimensional feature vector based on a detection value p1 (see FIG. 4) of the start point s of learning target data, and an elapsed time $\Delta t1$ (see FIG. 4) from the start of an operation process. The cluster learning unit 141Ad generates a two-dimensional feature vector similarly for other feature points: the local maximum point M1, the local minimum point m, the local maximum point M2, and the end point e (see FIG. 4).
The cluster learning unit 141Ad determines a cluster center c (see FIG. 6) and a cluster radius r (see FIG. 6) by clustering each feature vector. Furthermore, the cluster learning unit 141Ad stores cluster information as a learning result into the learning result storage unit 141Ae.
In the learning result storage unit 141Ae, the cluster information (the cluster center c, the cluster radius r) is stored as a database, for instance.

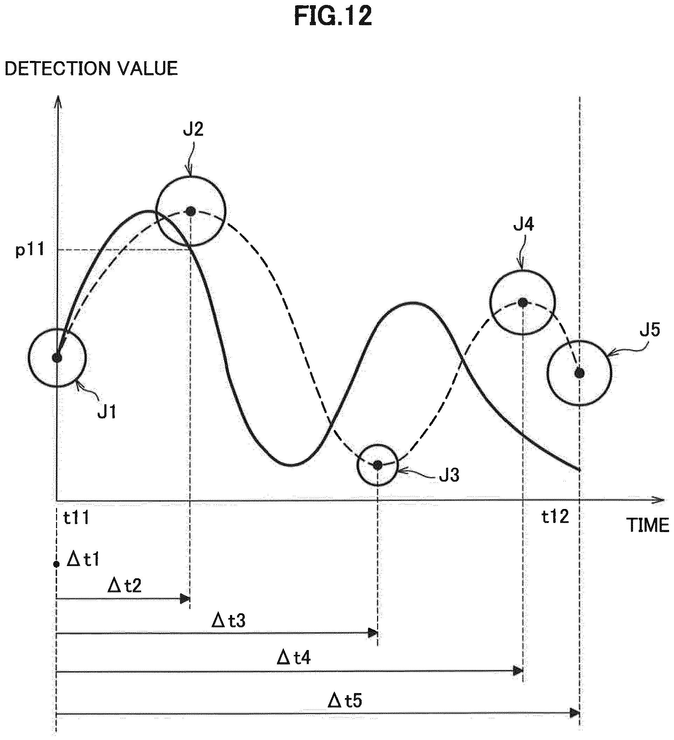

FIG. 12 is an explanatory diagram illustrating a relationship between feature points and clusters. It is to be noted that the dashed line indicates the sensor data acquired in a learning period (one-time operation process) in which the mechanical facility 2 is known to be in normal operation. The solid line indicates the sensor data acquired in a diagnosis period (one-time operation process) after the learning period is completed. In FIG. 12, the sensor data (dashed line) acquired in the learning period and the sensor data (solid line) acquired in the diagnosis period are illustrated with the start times of operation processes matched.
In the example illustrated in FIG. 12, five feature points including the start point, the two local maximum points, the local minimum points, and the end point are extracted in the sensor data (dashed line) of learning target, and clusters J1 to J5 are learned in a two-dimensional vector space for these respective feature points. It is to be noted that feature points and clusters do not necessarily correspond to each other on a one-to-one basis, and multiple clusters may be learned for one feature point.
A diagnosis means 142A illustrated in FIG. 11 includes a diagnosis target data acquisition unit 142a, a detection value identification unit 142f, an abnormality measure calculation unit 142Ac, and a diagnosis unit 142Ad.
The sensor data (that is, the diagnosis target data) acquired by the diagnosis target data acquisition unit 142a includes detection values of a sensor, and an elapsed time from the start time t11 (see FIG. 12) of an operation process of the mechanical facility 2. Similarly to the first embodiment, the diagnosis target data is acquired for each operation process repeated.
The detection value identification unit 142f identifies the detection values when the elapsed times $\Delta t1$ to $\Delta t5$ have passed since the start of an operation process based on the elapsed times $\Delta t1$ to $\Delta t5$ that provide respective cluster centers of the clusters J1 to J5 (see FIG. 12). For instance, the detection value identification unit 142f reads the cluster information on the cluster J2 illustrated in FIG. 12, and acquires the elapsed time $\Delta t2$ which provides the cluster center. The detection value identification unit 142f then identifies the detection value p11 when the elapsed time $\Delta t2$ has passed since the start of the operation process in the waveform (solid line) of the diagnosis target data that changes in time series. For other clusters J1, J3 to J5, the detection value identification unit 142f similarly identifies detection values when the predetermined elapsed times $\Delta t1$, $\Delta t3$ to $\Delta t5$ have passed since the start of the operation process.

The abnormality measure calculation unit 142Ac illustrated in FIG. 11 calculates an abnormality measure u of the diagnosis target data based on the detection values identified by the detection value identification unit 142f. For instance, the abnormality measure calculation unit 142Ac normalizes the elapsed time $\Delta t2$ (see FIG. 12) from the start of the operation process, and the detection value p11 (see FIG. 12) at the elapsed time $\Delta t2$ to convert into a two-dimensional feature vector. The abnormality measure calculation unit 142Ac then calculates the abnormality measure u of the diagnosis target data using (Expression 1) described in the first embodiment, based on the cluster information on the cluster J2 corresponding to the elapsed time $\Delta t2$, and the feature vector mentioned above.

In the example illustrated in FIG. 12, the detection value p11 of the diagnosis target data (solid line) at the elapsed time $\Delta t2$ is significantly smaller than the cluster center of the cluster J2. Therefore, in this case, it is highly probable that the abnormality measure u of the detection value at the elapsed time $\Delta t2$ exceeds a predetermined threshold value. For the detection values in other elapsed times $\Delta t1$, $\Delta t3$ to $\Delta t5$, the abnormality measure calculation unit 142Ac similarly calculates the abnormality measure u of the diagnosis target data.

The diagnosis unit 142Ad illustrated in FIG. 11 diagnoses the mechanical facility 2 for the presence of an abnormality predictor based on the abnormality measure u calculated by the abnormality measure calculation unit 142Ac. For instance, when the magnitude of one of multiple abnormality measures u calculated by the abnormality measure calculation unit 142Ac exceeds a predetermined threshold value, the diagnosis unit 142Ad diagnoses the mechanical facility 2 as "abnormality predictor is present". Also, when none of the multiple abnormality measures u exceeds the predetermined threshold value, the diagnosis unit 142Ad diagnoses the mechanical facility 2 as "abnormality predictor is not present". It is to be noted that when the number of operation processes, for which the abnormality measure u exceeds a predetermined threshold value, reaches a predetermined number in the operation process repeated in the mechanical facility 2, the diagnosis unit 142Ad may diagnose the mechanical facility 2 as "abnormality predictor is present".

<Operation of Abnormality Predictor Diagnosis System>

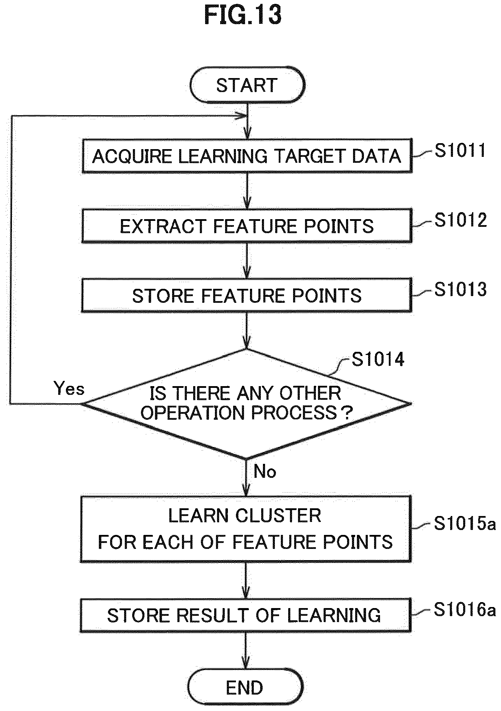

FIG. 13 is a flowchart of learning processing executed by the learning means 141A. Since steps S1011 to S1014 of FIG. 13 are the same as in the first embodiment (see FIG. 8), a description is omitted.

In step S1015a, the learning means 141A learns a cluster individually for each feature point by the cluster learning unit 141Ad. Specifically, the learning means 141A performs normalization processing on the detection values and the elapsed times at the feature points of the learning target data to convert into two-dimensional feature vectors, and generates a cluster for each feature point.

In step S1016a, the learning means 141A stores cluster information (the cluster center c, the cluster radius r) as a learning result into the learning result storage unit 141Ae.

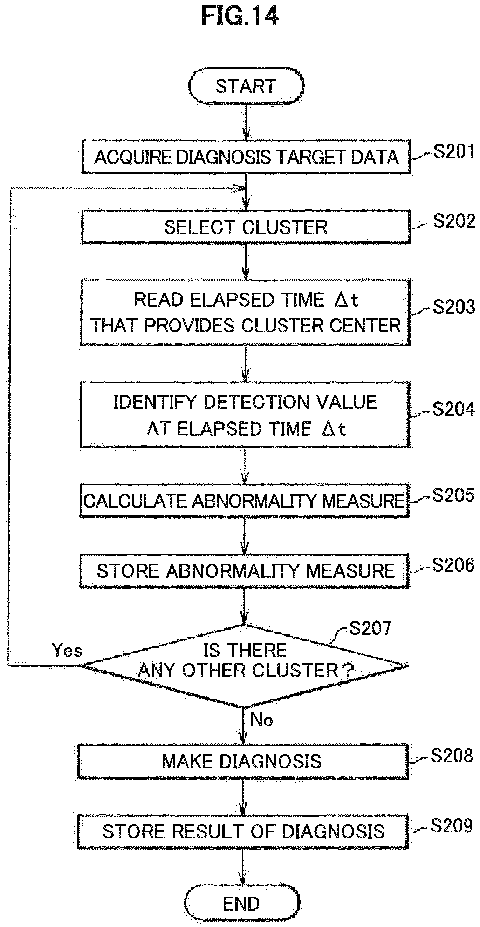

FIG. 14 is a flowchart of the diagnostic processing executed by the diagnosis means 142A.

In step S201, the diagnosis means 142A acquires diagnosis target data from the sensor data storage means 13 by the diagnosis target data acquisition unit 142a. That is, the diagnosis means 142A acquires the sensor data in the 1st time operation process as the diagnosis target data out of the sensor data acquired in the diagnosis period after the learning period is completed.

In step S202, the diagnosis means 142A refers to the cluster information stored in the learning result storage unit 141Ae, and selects one of multiple clusters. For instance, from the five clusters J1 to J5 illustrated in FIG. 12, the diagnosis means 142A selects the cluster J1 corresponding to the start point of the waveform.

In step S203, the diagnosis means 142A reads an elapsed time $\Delta t$ from the learning result storage unit 141Ae, the elapsed time $\Delta t$ providing the cluster center of the cluster selected in step S202. For instance, the diagnosis means 142A reads the elapsed time $\Delta t1$ which provides the cluster center of the cluster J1 illustrated in FIG. 12.

In step S204, the diagnosis means 142A identifies the detection value of the diagnosis target data at the elapsed time $\Delta t$ read in step S203, by the detection value identification unit 142f. For instance, the diagnosis means 142A identifies the detection value when the elapsed time $\Delta t1$ (see FIG. 12) has passed since the start of the operation process.

In step S205, the diagnosis means 142A calculates the abnormality measure u of the diagnosis target data by the abnormality measure calculation unit 142Ac. Specifically, the diagnosis means 142A normalizes the elapsed time $\Delta t$ read in step S203, and the detection value identified in step S204 to generate a two-dimensional feature vector, and calculates the abnormality measure u of the diagnosis target data based on the cluster information stored in the learning result storage unit 141Ae.

In step S206, the diagnosis means 142A stores the abnormality measure u calculated in step S205 in association with the cluster selected at step S202.

In step S207, the diagnosis means 142A determines whether or not there is any other cluster which is not used for diagnosis. When there is a cluster which is not used for diagnosis (Yes in S207), the processing of the diagnosis means 142A returns to step S202. On the other hand, in step 207, when there is no cluster which is not used for diagnosis (No in S207), the processing of the diagnosis means 142A proceeds to step S208.

In step S208, the diagnosis means 142A diagnoses the mechanical facility 2 for the presence of an abnormality predictor by the diagnosis unit 142Ad. That is, the diagnosis means 142A diagnoses the mechanical facility 2 for the presence of an abnormality predictor based on the abnormality measure u calculated in step S205.

In step S209, the diagnosis means 142A stores a diagnostic result in the diagnostic result storage means 15, and completes a series of diagnostic processing (END).

<Effects>

According to this embodiment, the feature points including a start point, a local maximum point, a local minimum point, and an end point are extracted for a operation process repeated, and a cluster is generated individually for each feature point, and thus a normal waveform of detection values of a sensor can be learned. Also, whether or not the waveform is abnormal (in other words, whether or not an abnormality predictor has occurred in the mechanical facility 2) can be diagnosed with high accuracy in the diagnosis target data based on the detection values at the elapsed times which provide the cluster centers.

When the abnormality measure of the diagnosis target data exceeds a predetermined threshold value, the timing of occurrence of an abnormality predictor can be identified, and a time of phase shift relative to the normal time can be identified by identifying the cluster used for the diagnosis.

<<Modification of Second Embodiment>>

For instance, a filter (not illustrated), which attenuates the harmonics included in the time-series waveform of the sensor data, may be added to the configuration described in the second embodiment, and learning processing may be performed based on the waveform with the harmonics attenuated by the filter. From the extremum points (the local maximum points, the local minimum points) included in the time-series waveform of the sensor data, an extremum point may be extracted as a feature point, for which the absolute value of the difference between the detection value of the sensor at the extremum point, and the detection value of the sensor a predetermined time before (or a predetermined time after) the time which provides the extremum point is greater than or equal to a predetermined threshold value. This can reduces unnecessary extraction of many feature points by the feature point extraction unis 141b.

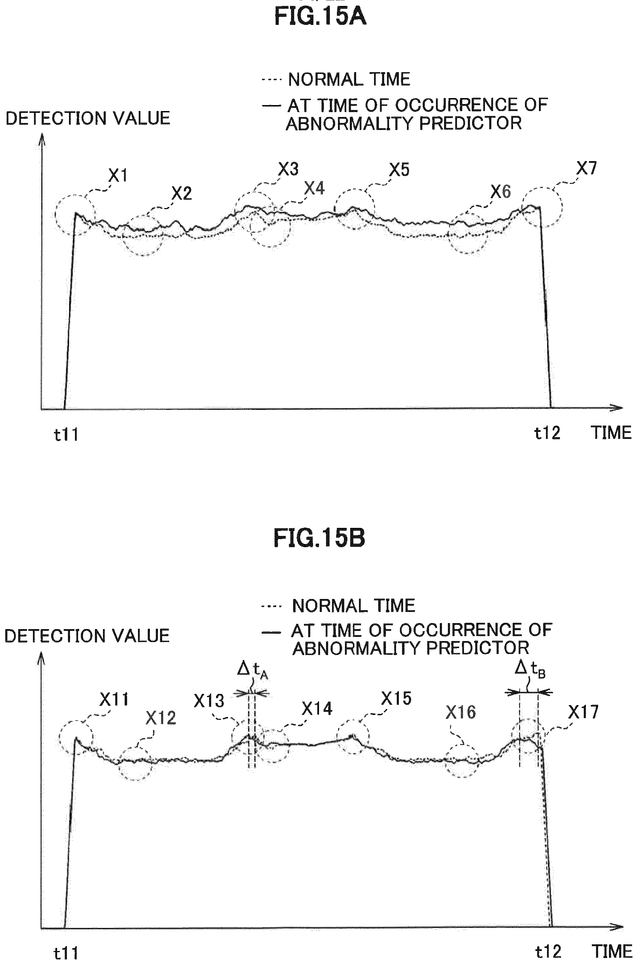

FIG. 15A is experimental data indicating a time-series change of detection values of a sensor at a normal time and at the time of occurrence of abnormality predictor of the mechanical facility 2. It is to be noted that the horizontal axis of FIG. 15A indicates time, and the vertical axis indicates detection value of a coolant water temperature sensor (not illustrated) installed in the mechanical facility 2 (a gas engine, not illustrated). Also, a dashed line of FIG. 15A indicates the sensor data at a normal time of the mechanical facility 2, and a solid line indicates the sensor data at the time of occurrence of abnormality predictor of the mechanical facility 2.

The dashed-line circle symbols X1 to X7 in FIG. 15A indicate the feature points included in the waveform of the detection values of a sensor. Practically, the harmonics included in the waveform are attenuated by a filter (not illustrated), and from many extremum points included in the waveform after being attenuated, an extremum point is extracted as a feature point, for which the absolute value of the difference between the sensor data at a predetermined time before the time which provides the extremum point and the sensor data at the extremum point is greater than or equal to a predetermined threshold value (the same goes for FIG. 15B described later).

In the example illustrated in FIG. 15A, at the feature points of circle symbols X3, X4, X6, the detection value of the sensor indicated by a solid line is greater than a normal time value indicated by the dashed line. As a result of calculating the abnormality measure u based on the method described in the second embodiment, a diagnostic result of "abnormality predictor is present" is outputted for the sensor data indicated by the solid line (that is, a gas engine which is the mechanical facility 2).

FIG. 15B is another experimental data indicating a time-series change of detection values of a sensor at a normal time and at the time of occurrence of abnormality predictor of the mechanical facility 2. A dashed line of FIG. 15B indicates the sensor data at a normal time of the mechanical facility 2, and a solid line indicates the sensor data at the time of occurrence of abnormality predictor of the mechanical facility 2.

The dashed-line circle symbols X11 to X17 in FIG. 15B indicate the feature points included in the waveform of the detection values of a sensor. In the example illustrated in FIG. 15B, in the sensor data indicated by the solid line, the time which provides the feature point of the circle symbol X13 is earlier by time $\Delta t_A$ than a normal time indicated by the dashed line (in other words, the elapsed time from the start time t11 of an operation process is shorter). Also, in the sensor data indicated as the solid line, the time which provides the feature point of the circle symbol X17 is delayed by time $\Delta t_B$ than a normal time indicated by the dashed line (in other words, the elapsed time from the start time t11 is longer) . For such sensor data, a diagnostic result of "abnormality predictor is present" is outputted based on the method described in the second embodiment.

Although in the second embodiment, a case has been described where a two-dimensional feature vector is generated in the sensor data acquired from one sensor (not illustrated) based on the detection value of a sensor and the elapsed time from the start of an operation process, the invention is not limited to this. For instance, the mechanical facility 2 may be diagnosed for the presence of an abnormality predictor based on the sensor data acquired from multiple sensors (not illustrated) installed in the mechanical facility 2. In this case, for instance, one sensor, by which feature points are easily extracted, is selected by a user based on prior experiments. The learning means 141A extracts feature points based on the sensor data acquired from the above-mentioned sensor, and identifies the elapsed time $\Delta t$ (the elapsed time from the start time of an operation process) at each feature point.

The learning means 141A generates a multi-dimensional feature vector based on the detection value of each sensor at the elapsed time $\Delta t$, and clusters each feature vector. In other words, the learning means 141A learns a cluster indicating a normal waveform of detection values of each sensor corresponding to the elapsed times $\Delta t$ which provides feature points. The learning means 141A then stores cluster information as a learning result into the learning result storage unit 141Ae in association with the elapsed times $\Delta t$.

After the above-mentioned learning of a cluster, the diagnosis means 142A reads one of the multiple elapsed times $\Delta t$ from the learning result storage unit 141Ae. For the diagnosis target data, the diagnosis means 142A identifies the detection value at the elapsed time $\Delta t$ for each sensor, and normalizes the detection value to convert into a feature vector. The diagnosis means 142A then calculates an abnormality measure u based on the feature vector after being converted and a cluster corresponding to the above-mentioned elapsed time $\Delta t$, and diagnoses the mechanical facility 2 for the presence of an abnormality predictor. It is to be noted that the method of calculating an abnormality measure u, and the method of diagnosing the presence of an abnormality predictor are as described in the second embodiment. A user can recognize what type of abnormality has occurred at which position of the mechanical facility 2 by using multiple sensors in this manner.

As described above, without selecting one sensor beforehand by which feature points are easily extracted, the learning means 141A may identify a sensor providing the greatest number of feature points in one-time operation process in the learning period, and may learn a cluster based on the feature points of the sensor data acquired from the sensor. Thus, it is possible to determine at many points on the waveform of the diagnosis target data whether or not a detection value of the diagnosis target data is out of a normal range. Therefore, the mechanical facility 2 can be diagnosed for the presence of an abnormality predictor with high accuracy.

<<Third Embodiment >>

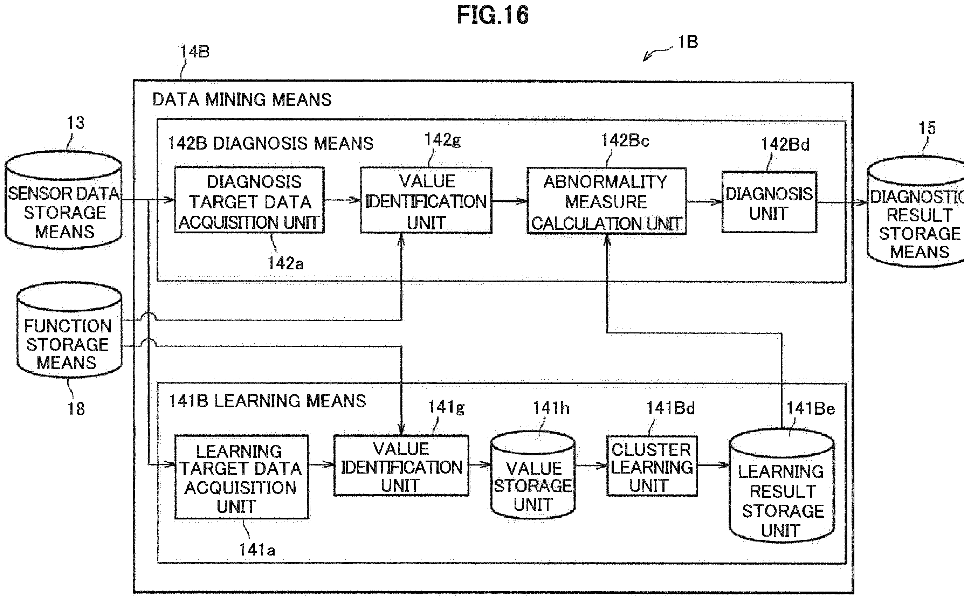

An abnormality predictor diagnosis system 1B (see FIG. 16) according to a third embodiment differs from the first embodiment in that a feature vector is generated based on a linear function that monotonously increases as time passes, and detection values of a sensor. In addition, the abnormality predictor diagnosis system 1B according to the third embodiment has a configuration in which a function storage means 18 (see FIG. 16) is added to the configuration (see FIG. 1) described in the first embodiment. The other overall configuration is the same as in the first embodiment (see FIG. 1), and is the same as the first embodiment in that a predetermined operation process is repeated in the mechanical facility 2. Thus, a portion different from the first embodiment will be described, and a description of a redundant portion is omitted.

<Configuration of Abnormality Predictor Diagnosis System>

FIG. 16 is a configuration diagram of a data mining means 14B included in the abnormality predictor diagnosis system 1B according to the third embodiment.

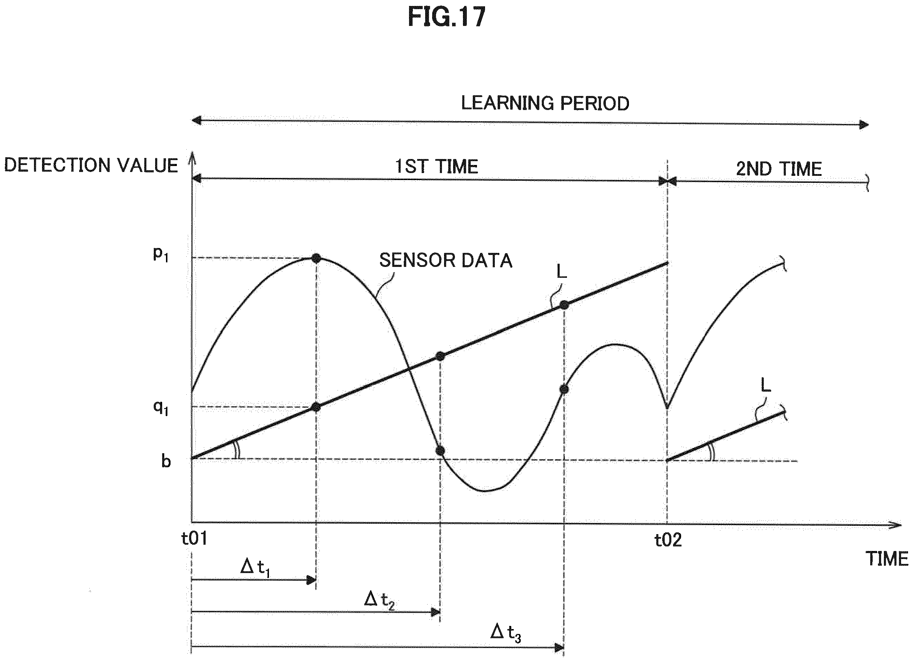

In the function storage means 18 illustrated in FIG. 16, linear functions (see lines L illustrated in FIG. 17), which monotonously increase as time passes in an operation process of the mechanical facility 2, are stored. The linear function is used for the later-described learning of a cluster and calculation of an abnormality measure.

As illustrated in FIG. 16, a learning means 141B includes a learning target data acquisition unit 141a, a value identification unit 141g, a value storage unit 141h, a cluster learning unit 141Bd, and a learning result storage unit 141Be.

The value identification unit 141g identifies the detection value of a sensor and the value of the linear function when predetermined times $\Delta t_1$, $\Delta t_2$, $\Delta t_3$ (see FIG. 17) have passed since the start of an operation process, based on the learning target data acquired by the learning target data acquisition unit 141a. The predetermined times $\Delta t_1$, $\Delta t_2$, $\Delta t_3$ are set beforehand so that an occurrence of an abnormality predictor of the mechanical facility 2 is sensitively reflected in the detection values of the sensor at the predetermined times $\Delta t_1$, $\Delta t_2$, $\Delta t_3$.

FIG. 17 is an explanatory diagram related to detection values of a sensor, and a line L represented by a linear function.

As illustrated in FIG. 17, an operation process is repeated for the 1st time, the 2nd time,... in the mechanical facility 2, and accordingly, the detection value of the sensor varies. As described above, each line L illustrated in FIG. 17 is a linear function ($y = a\Delta t + b$) that monotonously increases as time passes from the start time (time t01, time t02, ...) of an operation process.

The value identification unit 141g (see FIG. 16) identifies detection value $p_1$ of the sensor, and value $q_1$ of the line L expressed by the linear function when the predetermined time $\Delta t_1$ has passed since the start of an operation process. Similarly, for other predetermined times $\Delta t_2$, $\Delta t_3$, the value identification unit 141g identifies each of the detection value of the sensor and the value of the linear function.

In the value storage unit 141h illustrated in FIG. 16, the detection values and values of the linear function identified by the value identification unit 141g are stored in association with the predetermined times $\Delta t_1$, $\Delta t_2$, $\Delta t_3$. It is to be noted that when an operation process is repeated n times in the learning period, ($3 \times n$) sets of a detection value and a value of the linear function are stored in the value storage unit 141h.

The cluster learning unit 141Bd learns a cluster (normal model) indicating a normal waveform of detection values of the sensor, based on the detection values and the values of the linear function stored in the value storage unit 141h. Specifically, the cluster learning unit 141Bd normalizes the detection values and the values of the linear function stored in the value storage unit 141h, and generates two-dimensional feature vectors having the normalized values as the components. The cluster learning unit 141Bd then learns a cluster by clustering each feature vector. Since the method of learning a cluster is the same as in the first embodiment, a description is omitted.

In the learning result storage unit 141Be, the cluster information (the cluster center c, the cluster radius r), which is the result of learning by the cluster learning unit 141Bd, is stored.

Also, as illustrated in FIG. 16, a diagnosis means 142B includes a diagnosis target data acquisition unit 142a, a value identification unit 142g, an abnormality measure calculation unit 142Bc, and a diagnosis unit 142Bd. In the diagnosis target data acquired by the diagnosis target data acquisition unit 142a, the value identification unit 142g identifies the detection values of the sensor and the values of the linear function when the predetermined times $\Delta t_1$, $\Delta t_2$, $\Delta t_3$ have passed since the start of an operation process. The above-mentioned predetermined times $\Delta t_1$, $\Delta t_2$, $\Delta t_3$ are approximately the same as the predetermined times $\Delta t_1$, $\Delta t_2$, $\Delta t_3$ used by the learning means 141B. In addition, the linear function ($y = a\Delta t + b$) used by the diagnosis means 142B is also approximately the same as the linear function ($y = a\Delta t + b$) used by the learning means 141B.

The abnormality measure calculation unit 142Bc calculates an abnormality measure u of the diagnosis target data based on the detection values of the sensor and the values of the linear function identified by the value identification unit 142g, and the cluster information stored in the learning result storage unit 141Be. First, the abnormality measure calculation unit 142Bc normalizes the detection values of the sensor and the values of the linear function identified by the value identification unit 142g, and generates two-dimensional feature vectors having the normalized values as the components. The abnormality measure calculation unit 142Bc refers to the learning result storage unit 141Be, and identifies a cluster with a cluster center having the shortest distance from the feature vector, then calculates an abnormality measure u based on the (Expression 1).

The diagnosis unit 142Bd diagnoses the mechanical facility 2 for the presence of an abnormality predictor based on the abnormality measure u calculated by the abnormality measure calculation unit 142Bc. For instance, when there is diagnosis target data with an abnormality measure u exceeding a predetermined threshold value, the diagnosis unit 142Bd diagnoses the mechanical facility 2 as "abnormality predictor is present". Also, when there is no diagnosis target data with an abnormality measure u exceeding a predetermined threshold value, the diagnosis unit 142Bd diagnoses the mechanical facility 2 as "abnormality predictor is not present".

When the number of pieces of diagnosis target data with an abnormality measure exceeding a predetermined threshold value is greater than or equal to a predetermined number in a predetermined period, the diagnosis unit 142Bd may diagnose the mechanical facility 2 as "abnormality predictor is present".

<Operation of Abnormality Predictor Diagnosis System>

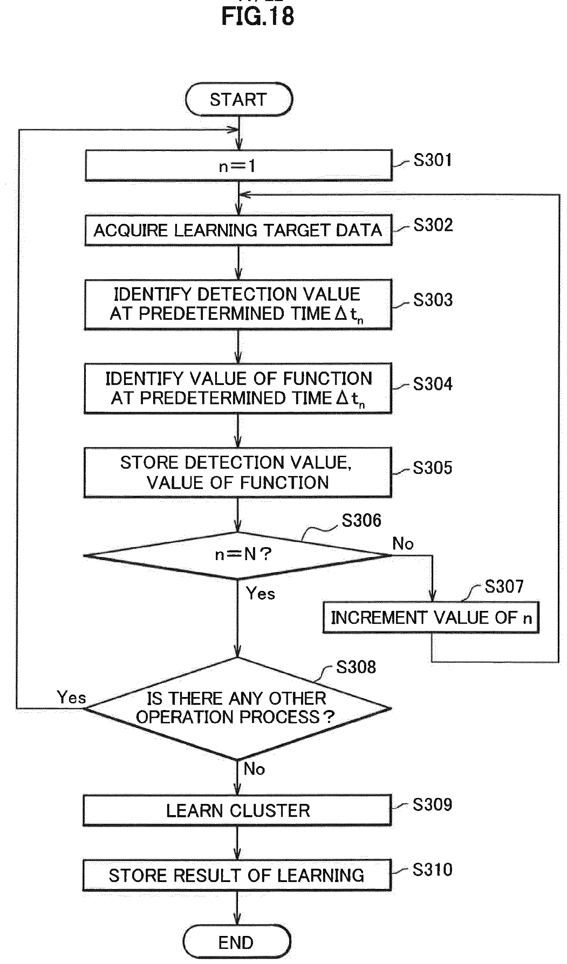

FIG. 18 is a flowchart of the learning processing executed by the learning means 141B. In step S301, the learning means 141B sets value n to 1. The value n is a natural number that, when multiple predetermined times are present (see 3 predetermined times $\Delta t_1$, $\Delta t_2$, $\Delta t_3$ illustrated in FIG. 17), is incremented (S307) for selecting a predetermined time used for identifying the detection value and the value of the linear function.

In step S302, the learning means 141B acquires learning target data from the sensor data storage means 13 by the learning target data acquisition unit 141a.

In step S303, the learning means 141B identifies the detection value $p_1$ of the sensor when the predetermined time $\Delta t_1$ has passed since the start time of an operation process, by the value identification unit 141g (see FIG. 17) . As described above, in addition to detection values of the sensor, the learning target data includes a signal indicating the start and end of an operation process. Therefore, based on the signal, it is possible to identify the detection value $p_1$ of the sensor when the predetermined time $\Delta t_1$ has passed since the start of an operation process.

In step S304, the learning means 141B substitutes the predetermined time $\Delta t_1$ into the linear function by the value identification unit 141g to identify the value of the linear function. Specifically, the learning means 141B identifies value y ($y = q_1$ in FIG. 17) of the linear function by substituting the predetermined time $\Delta t_1$ into the linear function: $y = a\Delta t + b$.

In step S305, the learning means 141B stores the detection value $p_1$ identified in step S303, and the value y of the linear function identified in step S304 in the value storage unit 141h in association with the predetermined time $\Delta t_1$.

In step S306, the learning means 141B determines whether or not the value n has reached a predetermined value N. The predetermined value N is the number of predetermined times $\Delta t_n$ (in this embodiment, 3 predetermined times $\Delta t_1$, $\Delta t_2$, $\Delta t_3$) used for identifying the detection value of the sensor and the value of the linear function.

When the value n has not reached the predetermined value N (No in S306), in step S307, the learning means 141B increments the value of n, and returns to the processing in step S302. The learning means 141B then identifies the detection values of the sensor and the values of the linear function for other predetermined times $\Delta t_2$, $\Delta t_3$.

On the other hand, when the value n has reached the predetermined value N in step S306 (Yes in S306), the processing of the learning means 141B proceeds to step S308.

In step S308, the learning means 141B determines whether or not there is another operation process, for which a detection value and a value of the linear function have not been acquired, in a predetermined learning period. When there is another operation process (Yes in S308), the processing of the learning means 141B returns to step S301. In other words, for another operation process, the learning means 141B identifies the detection values and the values of the linear function when the predetermined times $\Delta t_1$, $\Delta t_2$, $\Delta t_3$ have passed since the start of the operation process. Incidentally, the start time of each operation process, serving as the reference of the predetermined times $\Delta t_1$, $\Delta t_2$, $\Delta t_3$ is identified based on the start signal of the operation process included in the sensor data.

On the other hand, where there is no other operation process, for which a detection value and a value of the linear function have not been acquired in step S308 (No in S308), the processing of the learning means 141B proceeds to step S309.

In step S309, the learning means 141B learns a cluster based on the information stored in the value storage unit 141h. First, the learning means 141B performs normalization processing on the detection value identified in step S303 and the value of the function identified in step S304, and generates a feature vector. The learning means 141B learns a cluster that indicates a normal waveform of the detection values of the sensor by clustering each feature vector.

In step S310, the learning means 141B stores the result learned in step S309 in the learning result storage unit 141Be, and completes a series of learning processing (END).

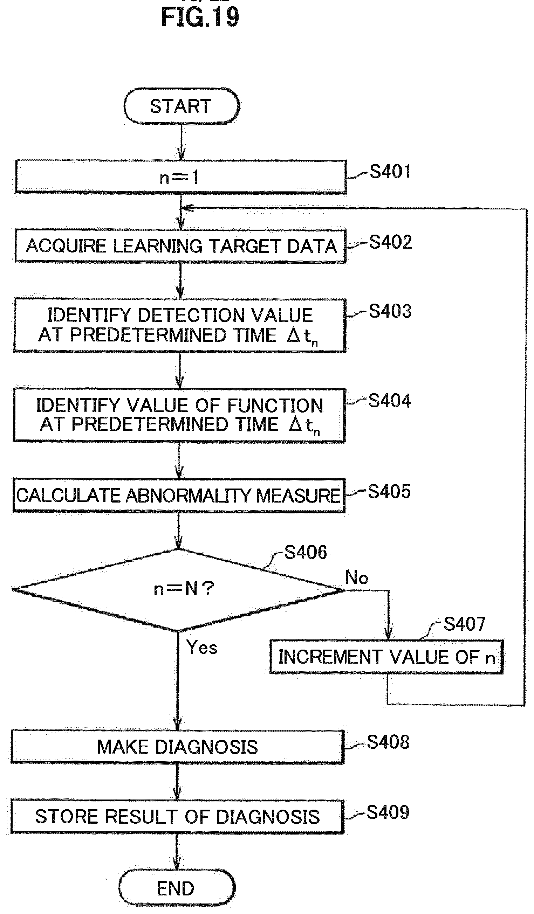

FIG. 19 is a flowchart of the diagnostic processing executed by the diagnosis means 142B.

In step S401, the diagnosis means 142B sets the value n to 1. The value n is the same as the value n described in step S301 of FIG. 18.

In step S402, the diagnosis means 142B acquires the diagnosis target data from the sensor data storage means 13 by the diagnosis target data acquisition unit 142a. That is, the diagnosis means 142B acquires the sensor data of the 1st time operation process as a diagnosis target out of the sensor data acquired in the diagnosis period after the learning period.

In step S403, the diagnosis means 142B identifies the detection value of the sensor when the predetermined time $\Delta t_1$ has passed since the start time of an operation process by the value identification unit 142g.

In step S404, the diagnosis means 142B substitutes the predetermined time $\Delta t_1$ into the linear function by the value identification unit 142g to identify the value of the linear function.

In step S405, the diagnosis means 142B calculates the abnormality measure u of the diagnosis target data by the abnormality measure calculation unit 142Bc. That is, in step S405, the diagnosis means 142B performs normalization processing on the detection value identified in step S403 and the value of the linear function identified in step S404 to generate a two-dimensional feature vector with normalized component values. The diagnosis means 142B then calculates the abnormality measure u of the diagnosis target data based on the feature vector and the cluster information stored in the learning result storage unit 141Be.

In step S406, the diagnosis means 142B determines whether or not the value n has reached the predetermined value N. The predetermined value N is the number of predetermined times $\Delta t_n$ used for identifying the detection value and the value of the linear function, and is the same as the predetermined value N (see FIG. 18) used by the learning processing. When the value n has not reached the predetermined value N (No in S406), in step S407, the diagnosis means 142B increments the value of n, and returns to the processing in step S402.

On the other hand, when the value n has reached the predetermined value N in step S406 (Yes in S406), the processing of the diagnosis means 142B proceeds to step S408.

In step S408, the diagnosis means 142B diagnoses the mechanical facility 2 for the presence of an abnormality predictor by the diagnosis unit 142Bd. Specifically, the diagnosis means 142B diagnoses the mechanical facility 2 for the presence of an abnormality predictor based on the abnormality measure u calculated in step S405.

In step S409, the diagnosis means 142B stores a diagnostic result in the diagnostic result storage means 15, and completes a series of diagnostic processing (END). The diagnosis means 142B repeats such diagnostic processing for each operation process included in the diagnosis period.

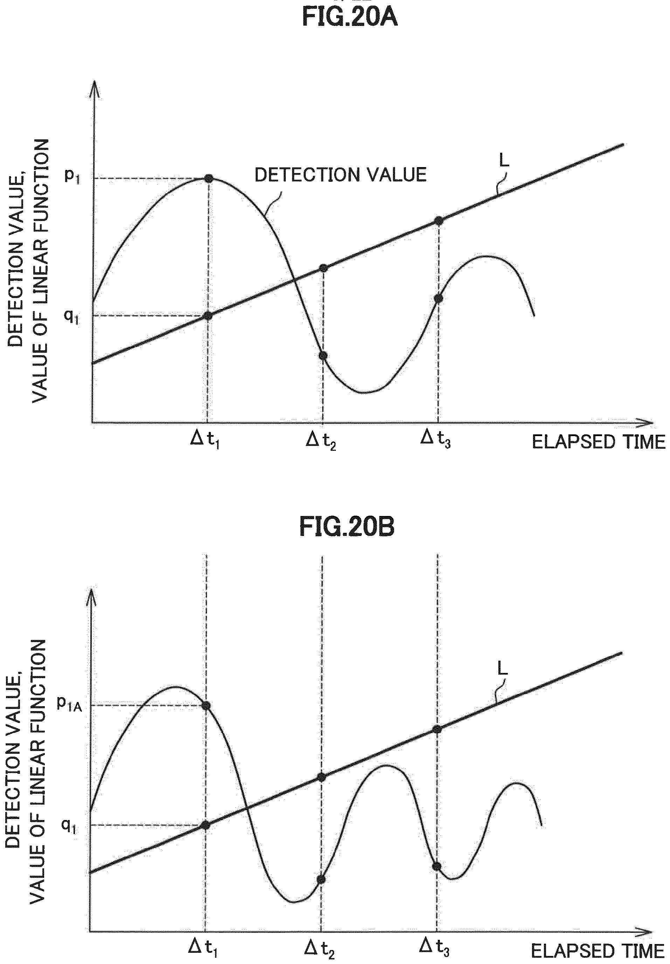

FIG. 20A is an explanatory diagram illustrating the waveform of learning target data, and line L of a linear function.

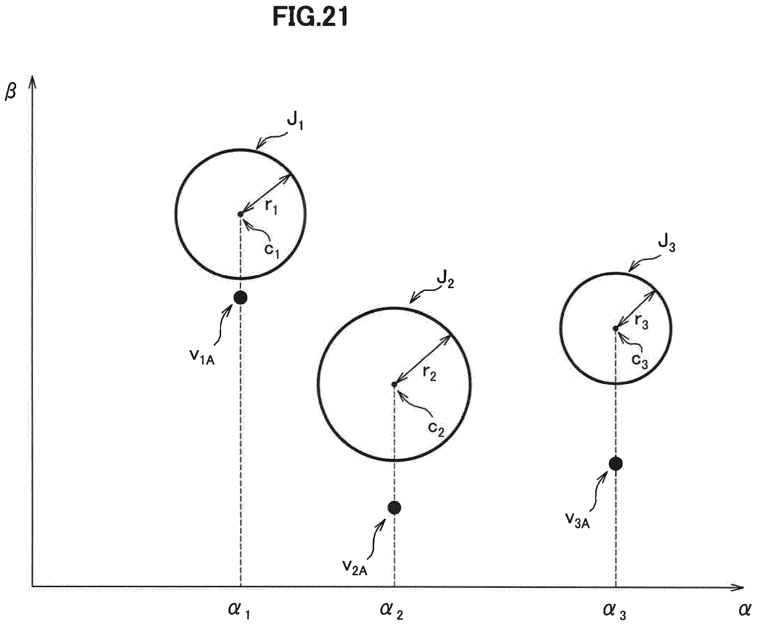

The waveform of the detection value illustrated in FIG. 20A is the learning target data (detection value) acquired in one-time operation process in the learning period in which the mechanical facility 2 is in normal operation. As described above, a two-dimensional feature vector is generated, which has component values obtained by normalizing the detection value $p_1$ of the sensor and the value $q_1$ of the linear function (the line L) when the predetermined time $\Delta t_1$ has passed since the start time of an operation process. Also, feature vectors are generated for other predetermined times $\Delta t_2$, $\Delta t_3$, and feature vectors are also generated for other operation processes included in the learning period. The clusters $J_1$, $J_2$, $J_3$ (see FIG. 21) are learned based on those feature vectors.

FIG. 21 is an explanatory diagram of cluster $J_1$, $J_2$, $J_3$ which are results of learning, and feature vectors $v_{1A}$, $v_{2A}$, $v_{3A}$ of the diagnosis target data.

The horizontal axis $\alpha$ of FIG. 21 indicates a numerical value after normalization of the value of the linear function, and the vertical axis $\beta$ indicates a numerical value after normalization of the detection value of the sensor. The cluster $J_1$ illustrated in FIG. 21 is the cluster based on the detection value of the sensor and the value of the linear function when the predetermined time $\Delta t_1$ (see FIG. 20A) has passed since the start time of an operation process, and the cluster is represented by the cluster center $c_1$ and the cluster radius $r_1$. Similarly, the cluster $J_2$ is the cluster corresponding to the predetermined time $\Delta t_2$ (see FIG. 20A), and the cluster $J_3$ is the cluster corresponding to the predetermined time $\Delta t_3$ (see FIG. 20A). Incidentally, multiple clusters may be learned at a predetermined time $\Delta t_n$.

FIG. 20B is an explanatory diagram illustrating the waveform of diagnosis target data, and line L of a linear function at the time of occurrence of abnormality predictor of the mechanical facility 2. In the example illustrated in FIG. 20B, the maximum value and the minimum value of the detection value in one-time operation process are the same as in the learning target data (see FIG. 20A) when the mechanical facility 2 is in normal operation, however, the waveform is different from that in a normal time. In a conventional abnormality predictor diagnosis system, diagnosis is made for the presence of an abnormality predictor based on only the detection values of a sensor, and thus erroneous diagnosis may be made as "abnormality predictor is not present" based on the diagnosis target data illustrated in FIG. 20B.

In contrast, in this embodiment, the mechanical facility 2 is diagnosed for the presence of an abnormality predictor based on whether or not a feature vector is present in a cluster, the feature vector being identified by the detection values of the sensor and the values of the linear function when the predetermined times $\Delta t_1$, $\Delta t_2$, $\Delta t_3$ have passed since the start time of an operation process. For instance, a feature vector $v_{1A}$ indicated by ●symbol of FIG. 21 is generated based on the detection value $p_{1A}$ and the value $q_1$ (value $\alpha_1$ after normalization, see FIG. 21) of the linear function at the predetermined time $\Delta t_1$ illustrated in FIG. 20B. The feature vector $v_{1A}$ is not included in the cluster $J_1$ closest to the feature vector $v_{1A}$, and thus diagnosed as "abnormality predictor is present" by the diagnosis unit 142Bd. The same goes for a feature vector $v_{2A}$ corresponding to the detection value and the like of the predetermined time $\Delta t_2$ (see FIG. 20B), and a feature vector $v_{3A}$ corresponding to the detection value and the like of the predetermined time $\Delta t_3$ (see FIG. 20B).

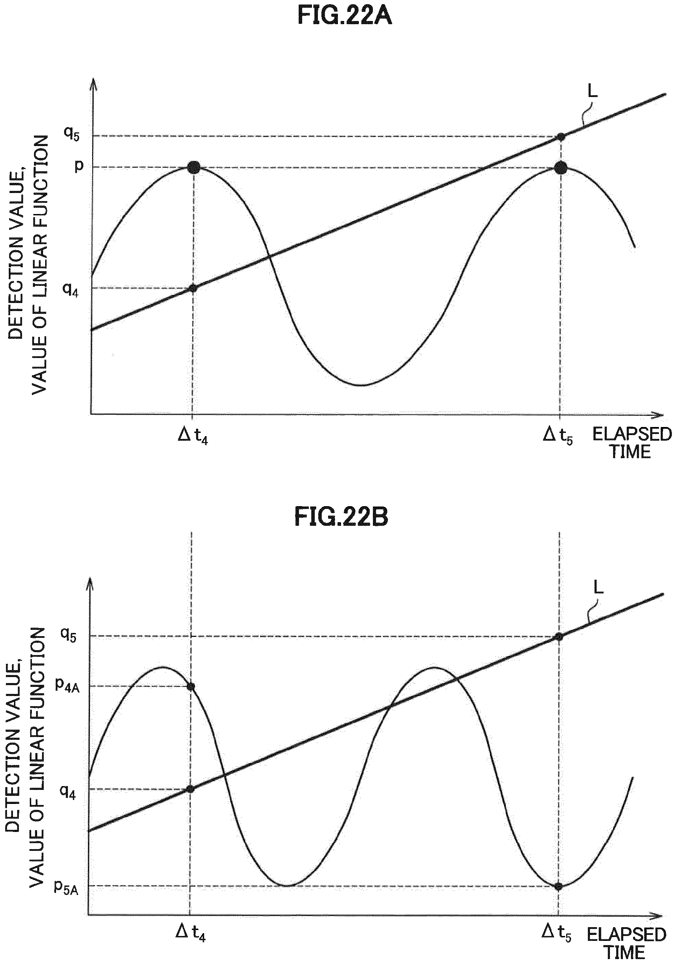

FIG. 22A is an explanatory diagram illustrating another example of the waveform of learning target data, and line L of a linear function.

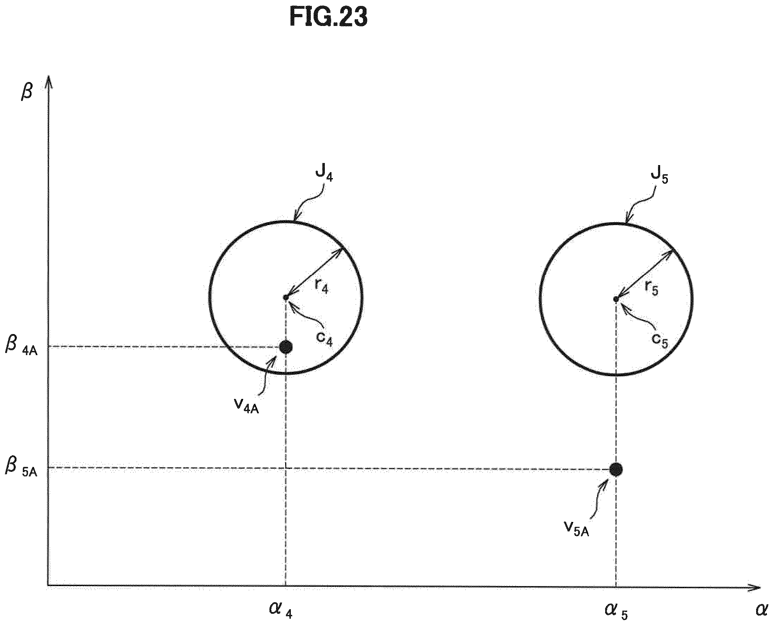

In the example illustrated in FIG. 22A, the detection value of a sensor varies in a sine wave form in the learning period in which the mechanical facility 2 is in normal operation. Also, two predetermined times $\Delta t_4$, $\Delta t_5$, which provide local maximum points of the waveform of detection values, are set. As illustrated in FIG. 22A, the detection values p at the predetermined times $\Delta t_4$, $\Delta t_5$ are the same, however, the values $q_4$, $q_5$ of the linear function are significantly different. As a result, different clusters $J_4$, $J_5$ (see FIG. 23) corresponding to the predetermined times $\Delta t_4$, $\Delta t_5$ are learned.

Incidentally, in a conventional technique that learns a cluster based on only the detection values of the sensor, the same detection value p is usually included in the same cluster. In other words, in a conventional technique, the detection value p at the predetermined time $\Delta t_4$ and the detection value p at the predetermined time $\Delta t_5$ have not been distinguished in the learning processing. In contrast, in this embodiment, even when the same value p is detected, if the predetermined times $\Delta t_4$, $\Delta t_5$ are different, the values of the linear function are different, and thus clusters can be learned in a distinguished manner. The learning result contributes to higher accuracy of abnormality predictor diagnosis as described later.

FIG. 22B is an explanatory diagram illustrating the waveform of diagnosis target data, and line L of a linear function at the time of occurrence of abnormality predictor.

In the example illustrated in FIG. 22B, although the amplitude of the waveform, and the maximum value and the minimum value are the same as in a normal time, the period of the waveform is shorter than in a normal time. As a result, particularly the detection value $p_{5A}$ at the predetermined time $\Delta t_5$ is significantly smaller than the detection value p in a normal time.

FIG. 23 is an explanatory diagram of clusters $J_4$, $J_5$ which are results of learning, and feature vectors $v_{4A}$, $v_{5A}$ of diagnosis target data. It is to be noted that the horizontal axis $\alpha$ and the vertical axis $\beta$ are the same as in FIG. 21. The cluster $J_4$ illustrated in FIG. 23 is the cluster that is learned by using the detection value of the sensor, and the value of the linear function when the predetermined time $\Delta t_4$ (see FIG. 22A) has passed since the start time of an operation process. The cluster Js is the cluster that is learned by using the detection value of the sensor, and the value of the linear function when the predetermined time $\Delta t_5$ (see FIG. 22A) has passed since the start time of an operation process.

As described above, the detection value $p_{5A}$ (see FIG. 22B, value $\beta_{5A}$ after normalization illustrated in FIG. 23) at the predetermined time $\Delta t_5$ is significantly smaller than the detection value p in a normal time. As a result, the feature vector $v_{5A}$ identified by the detection value and the value of the linear function at the predetermined time $\Delta t_5$ is located outside the cluster Js in the nearest neighbor, and is diagnosed as "abnormality predictor is present" by the diagnosis unit 142Bd.

It is to be noted that since the values $q_4$, $q_5$ (see FIG. 22A) of the linear function at the predetermined times $\Delta t_4$, $\Delta t_5$ are different in magnitude, the clusters $J_4$, $J_5$ illustrated in FIG. 23 are relatively separated in $\alpha$ axis direction. Also, in the feature vector $v_{5A}$ (see FIG. 23) based on the diagnosis target data, value as in the $\alpha$ axis direction is approximately equal to $\alpha$ component of the cluster center cs. This is because even for the learning target data or the diagnosis target data, the same value qs of the linear function at the predetermined time $\Delta t_5$ is provided (see FIGs. 22A and 22B). As a result, the cluster with a cluster center closest to the feature vector $v_{5A}$ is the cluster $J_5$ and not the cluster $J_4$. Therefore, the abnormality measure u of the detection value $p_{5A}$ at the predetermined time $\Delta t_5$ can be calculated based on the cluster Js corresponding to the predetermined time $\Delta t_5$. Consequently, it is possible to diagnose whether or not the waveform of the detection values of the diagnosis target data is abnormal with high accuracy (in other words, the presence of an abnormality predictor of the mechanical facility 2).

<Effects>

According to this embodiment, a cluster is learned by clustering two-dimensional feature vectors that are generated based on the detection values of the sensor and the values of the monotonously increasing linear function when the predetermined times $\Delta t_1, \Delta t_2, \Delta t_3$ have passed since the start time of an operation process. Thus, a normal waveform for the detection values of a sensor can be learned as a cluster.

Also, for the diagnosis target data, a feature vector is similarly generated, and it is possible to diagnose whether or not the waveform of the detection value is abnormal with high accuracy based on the cluster which is a result of the learning (in other words, whether or not an abnormality predictor has occurred in the mechanical facility 2).

<<Modification of Third Embodiment>>

Although in the third embodiment, a case has been described where two or three predetermined times $\Delta t_n$ (see FIGs. 20A and 20B, FIGs. 22A and 22B) are set in order to identify the detection value and the value of the linear function, the invention is not limited to this. Specifically, the number of predetermined times $\Delta t_n$ may be one, or may be four or greater.

Although in the third embodiment, a case has been described where a linear function that monotonously increases as time passes is used, the invention is not limited to this. For instance, a linear function that monotonously decreases as time passes may be used, or a curved function that monotonously increases or monotonously decreases as time passes may be used.

Although in the third embodiment, a case has been described where the mechanical facility 2 is diagnosed for the presence of an abnormality predictor based on the sensor data acquired from one sensor, the invention is not limited to this. Specifically, the mechanical facility 2 may be diagnosed for the presence of an abnormality predictor based on the sensor data acquired from multiple sensors. In this case, similarly to the third embodiment, a predetermined linear function is pre-set, and a multi-dimensional feature vector may be generated based on the detection values of the sensors and the values of the linear function when the predetermined times $\Delta t_1, \Delta t_2, \Delta t_3$ have passed since the start time of an operation process. It is to be noted that the dimension number of the feature vector is (the number of sensors) + 1. A user can recognize what type of abnormality has occurred at which position of the mechanical facility 2 by using multiple sensors in this manner.

<<Other Modifications>>

Although the abnormality predictor diagnosis systems 1, 1A, 1B according to the present invention have been described based on the embodiments above, the present invention is not limited to these embodiments, and various modifications may be made.

For instance, although in the embodiments, a case has been described where the cluster learning unit 141d performs clustering using k-means method which is one of non-hierarchical clustering methods, the invention is not limited to this. Specifically, fuzzy clustering and mixed density distribution method which are non-hierarchical clustering may be used as the learning processing performed by the cluster learning unit 141d.

Although in the embodiments, a case has been described where an operation process of the mechanical facility 2 is repeated without a break (see FIG. 2), the invention is not limited to this. That is, it is sufficient that the start and end of each operation process of the mechanical facility 2 be recognized, and an operation process may be performed with a predetermined break period.

Although in the first and second embodiments, a case has been described where a start point, a local maximum point, a local minimum point, and an end point are extracted as the "feature points", a feature point may be at least one of these points (for instance, a local maximum point, a local minimum point).

Also, the contribution level calculation unit 142e may be excluded from the configuration (see FIG. 3) of the first embodiment. Even in this configuration, the mechanical facility 2 may be appropriately diagnosed for the presence of an abnormality predictor based on the size of the abnormality measure u.

Although in the embodiments, the configuration has been described, in which a learned cluster is subsequently held (stored), the invention is not limited to this. Specifically, sensor data which is diagnosed as "abnormality predictor is not present" by the diagnosis unit 142d may be added to the learning target data, and the cluster center c and the cluster radius r may be recalculated (in other words, a cluster is re-learned) based on the learning target data with the addition. A cluster is re-learned in this manner, and thus information on the normal state of the mechanical facility 2 is gradually increased, and the cluster center c and the cluster radius r can be updated to more appropriate values. As described above, each time learning target data is added, the oldest data in the existing learning target data may be excluded from the learning target. Thus, even when the mechanical facility 2 changes over time according to seasonal change, the cluster can be updated to follow the change, and eventually, the diagnostic accuracy for an abnormality predictor can be increased.

Also, part or all of the components illustrated in FIG. 1, FIG. 3, FIG. 11, and FIG. 16 may be implemented by hardware, for instance, by designing an integrated circuit. Each component described above may be implemented by software in which a processor interprets and executes a program that implements each function. Information, such as a program, a tape, a file, which implements each function may be stored in a recording device, such as a memory, a hard disk, an SSD (Solid State Drive) or a recording medium, such as an IC card, an SD card, a DVD. Also, a control line or an information line which is considered to be necessary for description is illustrated, and all the control lines or information lines are not necessarily illustrated for a product. It may be interpreted that almost all components are practically connected to each other.

**Reference Signs List**

| | |
|---|---|
| 1, 1A, 1B | abnormality predictor diagnosis system |
| 11 | communication means |
| 12 | sensor data acquisition means |
| 13 | sensor data storage means |
| 14, 14A, 14B | data mining means |
| 15 | diagnostic result storage means (storage means) |
| 16 | display control means |
| 17 | display means |
| 18 | function storage means |
| 141, 141A, 141B | learning means |
| 141a | learning target data acquisition unit |
| 141b | feature point extraction unit |
| 141c | feature point storage unit |
| 141d, 141Ad, 141Bd | cluster learning unit |
| 141e, 141Ae, 141Be | learning result storage unit |
| 141g, 142g | value identification unit |
| 141h | value storage unit |
| 142, 142A, 142B | diagnosis means |
| 142a | diagnosis target data acquisition unit |
| 142b | feature point extraction unit |
| 142c, 142Ac, 142Bc | abnormality measure calculation unit |
| 142d, 142Ad, 142Bd | diagnosis unit |

| 142e | contribution level calculation unit |
| 142f | detection value identification unit |
| 2 | a mechanical facility |

**Claims**

1. An abnormality predictor diagnosis system comprising:

    a sensor data acquisition means (12) configured to acquire sensor data including a detection value of a sensor installed in a mechanical facility in which a predetermined operation process is repeated;
    a learning means (141) configured to set a learning target of a time-series waveform of the sensor data in a period in which the mechanical facility is known to be normal, extract therefrom a start point of the waveform at a start time of a respective operation process, a plurality of extremum points including a local maximum point and a local minimum point of the waveform, and an end point of the waveform at an end time of the operation process as feature points, acquire the detection values of the sensor at the feature points and elapsed times from the start time of the operation process to each of the feature points, as normal waveform data indicating the time-series waveform of the sensor data for the operation process repeated, convert the normal waveform data to a group of feature vectors, and cluster each of the feature vectors as a normal model; and
    a diagnosis means (142) configured to set a diagnosis target of the time-series waveform of the sensor data, extract therefrom the start point of the waveform at the start time of a respective operation process, the plurality of extremum points including the local maximum point and the local minimum point of the waveform, and the end point of the waveform at the end time of the operation process as feature points, acquire the detection values of the sensor at the feature points and the elapsed times from the start time of the operation process and to each of the feature points, as waveform data indicating the waveform, and diagnose the mechanical facility for presence of an abnormality predictor based on comparison between the waveform data and the normal model,
    **characterised in that**
    the learning means (141) is configured to learn at least one cluster, represented by a cluster center and a cluster radius, as the normal model by clustering a feature vector having components which are obtained by performing normalization processing on the detection value and the elapsed time included in the waveform data as the learning target for producing dimensionless quantities which allow mutual comparison, and
    the diagnosis means (142) is configured to perform normalization processing on the waveform data set as the diagnosis target to convert to a feature vector, identify a cluster with the cluster center closest to the feature vector among the at least one cluster, calculate a ratio of a distance between the cluster center and the feature vector to the cluster radius as an abnormality measure, and diagnose the mechanical facility for presence of an abnormality predictor based on the abnormality measure.

2. An abnormality predictor diagnosis system according to claim 1, wherein:
    the diagnosis means (142) is configured to calculate a ratio of the detection value included in the waveform data set as the diagnosis target to the distance, and a ratio of the elapsed time included in the waveform data set as the diagnosis target to the distance as a contribution level, and store the contribution level in a storage means.

3. The abnormality predictor diagnosis system according to claim 1 or 2, further comprising

    a filter configured to attenuate harmonics included in the time-series waveform of the sensor data,
    wherein the learning means (141) is configured to learn the normal model based on a waveform in which harmonics *included in sensor data set as a learning target are* attenuated by the filter, and
    the diagnosis means (142) is configured to diagnose the mechanical facility for presence of an abnormality predictor based on a waveform in which harmonics included in sensor data set as a diagnosis target are attenuated by the filter.

4. The abnormality predictor diagnosis system according to any one of claim 1 to 3, wherein the learning means (141) adds sensor data, which is diagnosed by the diagnosis means as having no abnormality predictor, to the learning target, and re-learns the normal model including the added sensor data.

5. A method of diagnosing an abnormality predictor, the method comprising:

acquiring sensor data including a detection value of a sensor installed in a mechanical facility in which a predetermined operation process is repeated;

setting a learning target of a time-series waveform of the sensor data in a period in which the mechanical facility is known to be normal, extracting therefrom a start point of the waveform at a start time of a respective operation process, a plurality of extremum points including a local maximum point and a local minimum point of the waveform, and an end point of the waveform at an end time of the operation process as feature points, acquiring the detection values of the sensor at the feature points and elapsed times from the start time of the operation process to each of the feature points, as normal waveform data indicating the time-series waveform of the sensor data for the operation process repeated (S1011~S1014);

converting the normal waveform data to a group of feature vectors, clustering each of the feature vectors as a normal model, and learning a cluster indicating a normal waveform of the detection value of the sensor (S1016); and

setting a diagnosis target of the time-series waveform of the sensor data, extracting therefrom the start point of the waveform at the start time of a respective operation process, the plurality of extremum points including the local maximum point and the local minimum point of the waveform, and the end point of the waveform at the end time of the operation process as feature points, acquiring the detection values of the sensor at the feature points and the elapsed times from the start time of the operation process to each of the feature points, as waveform data indicating the waveform, and diagnosing the mechanical facility for presence of an abnormality predictor based on comparison between the waveform data and the normal model (S1021-S1026), wherein:

at least one cluster, represented by a cluster center and a cluster radius, is learned as the normal model by clustering a feature vector having components which are obtained by performing normalization processing on the detection value and the elapsed time included in the waveform data as the learning target for producing dimensionless quantities which allow mutual comparison, and

normalization processing is performed on the waveform data set as the diagnosis target to convert to a feature vector, a cluster with the cluster center closest to the feature vector is identified among the at least one cluster, a ratio of a distance between the cluster center and the feature vector to the cluster radius is calculated as an abnormality measure, and the mechanical facility is diagnosed for presence of an abnormality predictor based on the abnormality measure.

**Patentansprüche**

1. Anomalieprädiktor-Diagnosesystem umfassend:

eine Sensordaten-Gewinnungseinrichtung (12) zum Gewinnen von Sensordaten einschließlich eines Erfassungswerts eines Sensors, der in einer mechanischen Anlage installiert ist, in der ein vorgegebener Betriebsprozess wiederholt wird;

eine Lerneinrichtung (141) zum Festlegen eines Lernobjekts einer Zeitfolge-Wellenform der Sensordaten in einer Zeit, in der die mechanische Anlage bekanntermaßen normal ist, daraus Gewinnen eines Anfangspunkts der Wellenform zu einer Anfangszeit eines entsprechenden Betriebsprozesses, mehrerer Extrempunkte einschließlich eines lokalen Maximumpunkts und eines lokalen Minimumpunkts der Wellenform sowie eines Endpunkts der Wellenform zu einer Endzeit des Betriebsprozesses als Merkmalspunkte, Gewinnen der Erfassungswerte des Sensors zu den Merkmalspunkten und der abgelaufenen Zeiten seit der Anfangszeit des Betriebsprozesses bis zu den jeweiligen Merkmalspunkten als normale Wellenformdaten, die die Zeitfolge-Wellenform der Sensordaten für den wiederholten Betriebsprozess angeben, Umwandeln der normalen Wellenformdaten in eine Gruppe von Merkmalsvektoren und Clustern der jeweiligen Merkmalsvektoren als Normalmodell; und

eine Diagnoseeinrichtung (142) zum Festlegen eines Diagnoseobjekts der Zeitfolge-Wellenform der Sensordaten, daraus Gewinnen des Anfangspunkts der Wellenform zur Anfangszeit eines entsprechenden Betriebsprozesses, der mehreren Extrempunkte einschließlich des lokalen Maximumpunkts und des lokalen Minimumpunkts der Wellenform sowie des Endpunkts der Wellenform zur Endzeit des Betriebsprozesses als Merkmalspunkte, Gewinnen der Erfassungswerte des Sensors zu den Merkmalspunkten und der abgelaufenen Zeiten von der Anfangszeit des Betriebsprozesses bis zu den jeweiligen Merkmalspunkten als Wellenformdaten, die die Wellenform angeben, und Diagnostizieren der mechanischen Anlage nach dem Vorliegen eines Anomalieprädiktors auf Grund eines Vergleichs zwischen den Wellenformdaten und dem Normalmodell, **dadurch gekennzeichnet, dass**

die Lerneinrichtung (141) eingerichtet ist, als Normalmodell mindestens einen Cluster, der durch ein Clusterzentrum und einen Clusterradius dargestellt ist, zu lernen, indem ein Merkmalsvektor mit Komponenten geclustert wird, die gewonnen werden, indem an dem Erfassungswert und der abgelaufenen Zeit, die in den Wellenformdaten als Lernobjekt enthalten sind, ein Normalisierungsprozess durchgeführt wird, um dimensionslose Größen zu erzeugen, die gegenseitige Vergleiche erlauben, und

die Diagnoseeinrichtung (142) eingerichtet ist, an den als Diagnoseobjekt festgelegten Wellenformdaten zur Umwandlung in einen Merkmalsvektor einen Normalisierungsprozess durchzuführen, unter dem mindestens einen Cluster einen Cluster mit einem dem Merkmalsvektor am nächsten liegenden Clusterzentrum zu identifizieren, ein Verhältnis des Abstands zwischen dem Clusterzentrum und dem Merkmalsvektor zum Clusterradius als Anomaliemaß zu berechnen und auf Grund des Anomaliemaßes die mechanische Anlage nach dem Vorliegen eines Anomalieprädiktors zu diagnostizieren.

2. Anomalieprädiktor-Diagnosesystem nach Anspruch 1, wobei
die Diagnoseeinrichtung (142) eingerichtet ist, als Beitragsmaß ein Verhältnis des in den als Diagnoseobjekt festgelegten Wellenformdaten enthaltenen Erfassungswerts zu dem Abstand sowie ein Verhältnis der in den als Diagnoseobjekt festgelegten Wellenformdaten enthaltenen abgelaufenen Zeit zum Abstand zu berechnen und das Beitragsmaß in einer Speichereinrichtung zu speichern.

3. Anomalieprädiktor-Diagnosesystem nach Anspruch 1 oder 2, weiterhin umfassend:

einen Filter zum Dämpfen von Harmonischen, die in der Zeitfolge-Wellenform der Sensordaten enthalten sind, wobei die Lerneinrichtung (141) eingerichtet ist, das Normalmodell auf Grund einer Wellenform zu lernen, in der in den als Lernobjekt festgelegten Sensordaten enthaltene Harmonische durch den Filter gedämpft sind, und die Diagnoseeinrichtung (142) eingerichtet ist, die mechanische Anlage auf Grund einer Wellenform nach dem Vorliegen eines Anomalieprädiktors zu diagnostizieren, in der in den als Diagnoseobjekt festgelegten Sensordaten enthaltene Harmonische durch den Filter gedämpft sind.

4. Anomalieprädiktor-Diagnosesystem nach einem der Ansprüche 1 bis 3, wobei die Lerneinrichtung (141) Sensordaten, die von der Diagnoseeinrichtung als frei von einem Anomalieprädiktor diagnostiziert wurden, zum Lernobjekt hinzufügt und das Normalmodell mit den hinzugefügten Sensordaten neu erlernt.

5. Verfahren zum Diagnostizieren eines Anomalieprädiktors, umfassend:

Gewinnen von Sensordaten einschließlich eines Erfassungswerts eines in einer mechanischen Anlage installierten Sensors, in der ein vorbestimmter Betriebsprozess wiederholt wird;
Festlegen einers Lernobjekts einer Zeitfolge-Wellenform der Sensordaten in einer Zeit, in der die mechanische Anlage bekanntermaßen normal ist, daraus Gewinnen eines Anfangspunkts der Wellenform zu einer Anfangszeit eines entsprechenden Betriebsprozesses, mehrerer Extrempunkte einschließlich eines lokalen Maximumpunkts und eines lokalen Minimumpunkts der Wellenform sowie eines Endpunkts der Wellenform zu einer Endzeit des Betriebsprozesses als Merkmalspunkte, Gewinnen der Erfassungswerte des Sensors zu den Merkmalspunkten und der abgelaufenen Zeiten seit der Anfangszeit des Betriebsprozesses bis zu den jeweiligen Merkmalspunkten als normale Wellenformdaten, die die Zeitfolge-Wellenform der Sensordaten für den wiederholten Betriebsprozess angeben (S1011-S1014);
Umwandeln der normalen Wellenformdaten in eine Gruppe von Merkmalsvektoren, Clustern der jeweiligen Merkmalsvektoren als Normalmodell und Lernen eines Clusters, der eine normale Wellenform des Erfassungswerts des Sensors angibt (S1016); und
Festlegen eines Diagnoseobjekts der Zeitfolge-Wellenform der Sensordaten, daraus Gewinnen des Anfangspunkts der Wellenform zur Anfangszeit eines entsprechenden Betriebsprozesses, mehrerer Extrempunkte einschließlich des lokalen Maximumpunkts und des lokalen Minimumpunkts der Wellenform sowie des Endpunkts der Wellenform zur Endzeit des Betriebsprozesses als Merkmalspunkte, Gewinnen der Erfassungswerte des Sensors an den Merkmalspunkten und der abgelaufenen Zeiten von der Anfangszeit des Betriebsprozesses bis zu den jeweiligen Merkmalspunkten als Wellenformdaten, die die Wellenform angeben, und Diagnostizieren der mechanischen Anlage nach dem Vorliegen eines Anomalieprädiktors auf Grund eines Vergleichs zwischen den Wellenformdaten und dem Normalmodell (S1021-S1026),
wobei:

als Normalmodell mindestens ein Cluster, der durch ein Clusterzentrum und einen Clusterradius dargestellt ist, gelernt wird, indem ein Merkmalsvektor mit Komponenten geclustert wird, die gewonnen werden, indem an dem Erfassungswert und der abgelaufenen Zeit, die in den Wellenformdaten als Lernobjekt enthalten sind, ein Normalisierungsprozess durchgeführt wird, um dimensionslose Größen zu erzeugen, die einen gegenseitigen Vergleich zulassen, und

an den als Diagnoseobjekt festgelegten Wellenformdaten zur Umwandlung in einen Merkmalsvektor ein Normalisierungsprozess durchgeführt wird, unter dem mindestens einen Cluster ein Cluster mit einem dem Merkmalsvektor am nächsten liegenden Clusterzentrum identifiziert wird, ein Verhältnis des Abstands zwischen dem Clusterzentrum und dem Merkmalsvektor zum Clusterradius als Anomaliemaß berechnet wird und auf Grund des Anomaliemaßes die mechanische Anlage nach dem Vorliegen eines Anomalieprädiktors diagnostiziert wird.

**Revendications**

1. Système de diagnostic de prédicteur d'anomalies comprenant :

   un moyen (12) d'acquisition de données de capteur configuré pour acquérir des données de capteur incluant une valeur de détection d'un capteur installé dans une installation mécanique dans laquelle un processus d'opération prédéterminé est répété ;
   un moyen (141) d'apprentissage configuré pour paramétrer une cible d'apprentissage d'une forme d'onde chronologique des données de capteur dans une période dans laquelle l'installation mécanique est connue pour être normale, extraire de celles-ci un point de départ de la forme d'onde à un instant de départ d'un processus d'opération respectif, une pluralité de points d'extremum incluant un point de maximum local et un point de minimum local de la forme d'onde, et un point d'extrémité de la forme d'onde à un instant de fin du processus d'opération comme points caractéristiques, acquérir les valeurs de détection du capteur aux points caractéristiques et des durées écoulées de l'instant de départ du processus d'opération jusqu'à chacun des points caractéristiques, comme données de forme d'onde normales indiquant la forme d'onde chronologique des données de capteur pour le processus d'opération répété, convertir les données de forme d'onde normales en un groupe de vecteurs caractéristiques, et regrouper chacun des vecteurs caractéristiques comme un modèle normal ; et
   un moyen (142) de diagnostic configuré pour paramétrer une cible de diagnostic de la forme d'onde chronologique des données de capteur, extraire de celles-ci le point de départ de la forme d'onde à l'instant de départ d'un processus d'opération respectif, la pluralité de points d'extremum incluant le point de maximum local et le point de minimum local de la forme d'onde, et le point d'extrémité de la forme d'onde à l'instant de fin du processus d'opération comme points caractéristiques, acquérir les valeurs de détection du capteur aux points caractéristiques et les durées écoulées de l'instant de départ du processus d'opération et jusqu'à chacun des points caractéristiques, comme données de forme d'onde indiquant la forme d'onde, et diagnostiquer l'installation mécanique pour la présence d'un prédicteur d'anomalies sur la base d'une comparaison entre les données de forme d'onde et le modèle normal,
   **caractérisé en ce que**
   le moyen (141) d'apprentissage est configuré pour apprendre au moins un groupe, représenté par un centre de groupe et un rayon de groupe, comme le modèle normal par regroupement d'un vecteur caractéristique ayant des composants qui sont obtenus en exécutant un traitement de normalisation sur la valeur de détection et la durée écoulée incluses dans les données de forme d'onde comme la cible d'apprentissage pour produire des quantités sans dimension qui permettent une comparaison mutuelle, et
   le moyen (142) de diagnostic est configuré pour exécuter un traitement de normalisation sur les données de forme d'onde paramétrées comme la cible de diagnostic pour une conversion en un vecteur caractéristique, identifier un groupe avec le centre de groupe le plus proche du vecteur caractéristique parmi l'au moins un groupe, calculer un rapport d'une distance entre le centre de groupe et le vecteur caractéristique sur le rayon de groupe comme une mesure d'anomalie, et diagnostiquer l'installation mécanique pour la présence d'un prédicteur d'anomalies sur la base de la mesure d'anomalie.

2. Système de diagnostic de prédicteur d'anomalies selon la revendication 1, dans lequel :
   le moyen (142) de diagnostic est configuré pour calculer un rapport de la valeur de détection incluse dans les données de forme d'onde paramétrées comme la cible de diagnostic sur la distance, et un rapport de la durée écoulée incluse dans les données de forme d'onde paramétrées comme la cible de diagnostic sur la distance comme un niveau de contribution, et stocker le niveau de contribution dans un moyen de stockage.

3. Système de diagnostic de prédicteur d'anomalies selon la revendication 1 ou 2, comprenant en outre

un filtre configuré pour atténuer des harmoniques incluses dans la forme d'onde chronologique des données de capteur,

dans lequel le moyen (141) d'apprentissage est configuré pour apprendre le modèle normal sur la base d'une forme d'onde dans laquelle des harmoniques incluses dans des données de capteur paramétrées comme une cible d'apprentissage sont atténuées par le filtre, et

le moyen (142) de diagnostic est configuré pour diagnostiquer l'installation mécanique pour la présence d'un prédicteur d'anomalies sur la base d'une forme d'onde dans laquelle des harmoniques incluses dans des données de capteur paramétrées comme une cible de diagnostic sont atténuées par le filtre.

4. Système de diagnostic de prédicteur d'anomalies selon l'une quelconque des revendications 1 à 3, dans lequel le moyen (141) d'apprentissage ajoute des données de capteur, qui sont diagnostiquées par le moyen de diagnostic comme n'ayant pas de prédicteur d'anomalie, à la cible d'apprentissage, et réapprend le modèle normal incluant les données de capteur ajoutées.

5. Procédé de diagnostic d'un prédicteur d'anomalies, le procédé comprenant :

l'acquisition de données de capteur incluant une valeur de détection d'un capteur installé dans une installation mécanique dans laquelle un processus d'opération prédéterminé est répété ;

le paramétrage d'une cible d'apprentissage d'une forme d'onde chronologique des données de capteur dans une période dans laquelle l'installation mécanique est connue pour être normale, l'extraction de celles-ci d'un point de départ de la forme d'onde à un instant de départ d'un processus d'opération respectif, d'une pluralité de points d'extremum incluant un point de maximum local et un point de minimum local de la forme d'onde, et un point d'extrémité de la forme d'onde à un instant de fin du processus d'opération comme points caractéristiques, l'acquisition des valeurs de détection du capteur aux points caractéristiques et des durées écoulées de l'instant de départ du processus d'opération jusqu'à chacun des points caractéristiques, comme données de forme d'onde normales indiquant la forme d'onde chronologique des données de capteur pour le processus d'opération répété (S1011~S1014) ;

la conversion des données de forme d'onde normales en un groupe de vecteurs caractéristiques, le regroupement de chacun des vecteurs caractéristiques comme un modèle normal, et l'apprentissage d'un groupe indiquant une forme d'onde normale de la valeur de détection du capteur (S1016) ; et

le paramétrage d'une cible de diagnostic de la forme d'onde chronologique des données de capteur, l'extraction de celles-ci du point de départ de la forme d'onde à l'instant de départ d'un processus d'opération respectif, de la pluralité de points d'extremum incluant le point de maximum local et le point de minimum local de la forme d'onde, et le point d'extrémité de la forme d'onde à l'instant de fin du processus d'opération comme points caractéristiques, l'acquisition des valeurs de détection du capteur aux points caractéristiques et des durées écoulées de l'instant de départ du processus d'opération jusqu'à chacun des points caractéristiques, comme données de forme d'onde indiquant la forme d'onde, et le diagnostic de l'installation mécanique pour la présence d'un prédicteur d'anomalies sur la base d'une comparaison entre les données de forme d'onde et le modèle normal (S1021-S1026),

dans lequel :

au moins un groupe, représenté par un centre de groupe et un rayon de groupe, est appris comme le modèle normal par regroupement d'un vecteur caractéristique ayant des composants qui sont obtenus en exécutant un traitement de normalisation sur la valeur de détection et la durée écoulée incluses dans les données de forme d'onde comme la cible d'apprentissage pour produire des quantités sans dimension qui permettent une comparaison mutuelle, et

un traitement de normalisation est exécuté sur les données de forme d'onde paramétrées comme la cible de diagnostic pour une conversion en un vecteur caractéristique, un groupe avec le centre de groupe le plus proche du vecteur caractéristique est identifié parmi l'au moins un groupe, un rapport d'une distance entre le centre de groupe et le vecteur caractéristique sur le rayon de groupe est calculé comme une mesure d'anomalie, et l'installation mécanique est diagnostiquée pour la présence d'un prédicteur d'anomalies sur la base de la mesure d'anomalie.

# FIG.1

# FIG.2

EP 3 333 660 B1

## FIG.3

# FIG.4

DETECTION VALUE

1ST TIME

2ND TIME

M1

M2

p2

p4

s

p5

p1

m

p3

e

0  t01

t02

TIME

$\Delta$ t1

$\Delta$ t2

$\Delta$ t3

$\Delta$ t4

$\Delta$ t5

EP 3 333 660 B1

## FIG.5

| | 1ST FEATURE POINT (START POINT s) | | 2ND FEATURE POINT (LOCAL MAXIMUM POINT M1) | | 3RD FEATURE POINT (LOCAL MINIMUM POINT m) | | 4TH FEATURE POINT (LOCAL MAXIMUM POINT M2) | | 5TH FEATURE POINT (END POINT e) | |
|---|---|---|---|---|---|---|---|---|---|---|
| | DETECTION VALUE p1 | ELAPSED TIME $\Delta t1$ | DETECTION VALUE p2 | ELAPSED TIME $\Delta t2$ | DETECTION VALUE p3 | ELAPSED TIME $\Delta t3$ | DETECTION VALUE p4 | ELAPSED TIME $\Delta t4$ | DETECTION VALUE p5 | ELAPSED TIME $\Delta t5$ |
| 1ST TIME | 22. 15 | 0 | 35. 54 | 5. 02 | 9. 76 | 11. 01 | 29. 86 | 17. 25 | 21. 17 | 25. 00 |
| 2ND TIME | 22. 17 | 0 | 35. 55 | 5. 03 | 9. 75 | 11. 01 | 29. 89 | 17. 30 | 21. 16 | 25. 00 |
| ... | ... | ... | ... | ... | ... | ... | ... | ... | ... | ... |
| nTH TIME | 22. 14 | 0 | 35. 48 | 4. 99 | 9. 78 | 11. 00 | 29. 84 | 17. 22 | 21. 11 | 25. 00 |

EP 3 333 660 B1

# FIG.6

# FIG.7

# FIG.8

```
            ┌─────────┐
            │  START  │
            └─────────┘
                 │
    ┌────────────┼
    │   ┌─────────────────────────────────┐
    │   │ ACQUIRE LEARNING TARGET DATA    │──S1011
    │   └─────────────────────────────────┘
    │                │
    │   ┌─────────────────────────────────┐
    │   │ EXTRACT FEATURE POINTS          │──S1012
    │   └─────────────────────────────────┘
    │                │
    │   ┌─────────────────────────────────┐
    │   │ STORE FEATURE POINTS            │──S1013
    │   └─────────────────────────────────┘
    │                │              S1014
    │         ╱───────────────────╲
    │  Yes   ╱  IS THERE ANY OTHER  ╲
    └───────│  OPERATION PROCESS ?   │
            ╲                       ╱
             ╲─────────────────────╱
                      │ No
            ┌─────────────────────────────────┐
            │ LEARN CLUSTER                   │──S1015
            └─────────────────────────────────┘
                      │
            ┌─────────────────────────────────┐
            │ STORE RESULT OF LEARNING        │──S1016
            └─────────────────────────────────┘
                      │
               ┌─────────┐
               │   END   │
               └─────────┘
```

# FIG.9

START

ACQUIRE DIAGNOSIS TARGET DATA — S1021

EXTRACT FEATURE POINTS — S1022

CALCULATE ABNORMALITY MEASURE — S1023

CALCULATE CONTRIBUTION LEVEL — S1024

MAKE DIAGNOSIS — S1025

STORE RESULT OF DIAGNOSIS — S1026

END

EP 3 333 660 B1

# FIG.10A

# FIG.10B

## FIG.11

**14A**

**1A**

DATA MINING MEANS

**13**

SENSOR DATA STORAGE MEANS

**142A DIAGNOSIS MEANS**

**142f**    **142Ac**    **142Ad**

| DIAGNOSIS TARGET DATA ACQUISITION UNIT | DETECTION VALUE IDENTIFICATION UNIT | ABNORMALITY MEASURE CALCULATION UNIT | DIAGNOSIS UNIT |

**142a**

**15**

DIAGNOSTIC RESULT STORAGE MEANS

**141A LEARNING MEANS**

**141b**    **141c**    **141Ad**    **141Ae**

| LEARNING TARGET DATA ACQUISITION UNIT | FEATURE POINT EXTRACTION UNIT | FEATURE POINT STORAGE UNIT | CLUSTER LEARNING UNIT | LEARNING RESULT STORAGE UNIT |

**141a**

EP 3 333 660 B1

# FIG.12

DETECTION VALUE

# FIG.13

```
              ┌──────────┐
              │  START   │
              └──────────┘
                   │
    ┌──────────────┼
    │     ┌─────────────────────────────────┐
    │     │  ACQUIRE LEARNING TARGET DATA   │──S1011
    │     └─────────────────────────────────┘
    │                  │
    │     ┌─────────────────────────────────┐
    │     │     EXTRACT FEATURE POINTS      │──S1012
    │     └─────────────────────────────────┘
    │                  │
    │     ┌─────────────────────────────────┐
    │     │      STORE FEATURE POINTS       │──S1013
    │     └─────────────────────────────────┘
    │                  │
    │                                 S1014
    │  Yes  ◇ IS THERE ANY OTHER ◇
    └───────◇ OPERATION PROCESS ? ◇
            ◇                     ◇
                      │ No
            ┌─────────────────────────────────┐
            │        LEARN CLUSTER            │──S1015a
            │  FOR EACH OF FEATURE POINTS     │
            └─────────────────────────────────┘
                      │
            ┌─────────────────────────────────┐
            │    STORE RESULT OF LEARNING     │──S1016a
            └─────────────────────────────────┘
                      │
              ┌──────────┐
              │   END    │
              └──────────┘
```

# FIG.14

START

ACQUIRE DIAGNOSIS TARGET DATA — S201

SELECT CLUSTER — S202

READ ELAPSED TIME $\Delta t$
THAT PROVIDES CLUSTER CENTER — S203

IDENTIFY DETECTION VALUE
AT ELAPSED TIME $\Delta t$ — S204

CALCULATE ABNORMALITY MEASURE — S205

STORE ABNORMALITY MEASURE — S206

IS THERE
ANY OTHER CLUSTER ? — S207

Yes

No

MAKE DIAGNOSIS — S208

STORE RESULT OF DIAGNOSIS — S209

END

## FIG.15A

···· NORMAL TIME
— AT TIME OF OCCURRENCE OF
  ABNORMALITY PREDICTOR

DETECTION VALUE

t11                                        t12    TIME

## FIG.15B

···· NORMAL TIME
— AT TIME OF OCCURRENCE OF
  ABNORMALITY PREDICTOR

DETECTION VALUE

t11                                        t12    TIME

**FIG.16**

DATA MINING MEANS (14B) (1B)

142B DIAGNOSIS MEANS
- DIAGNOSIS TARGET DATA ACQUISITION UNIT (142a)
- VALUE IDENTIFICATION UNIT (142g)
- ABNORMALITY MEASURE CALCULATION UNIT (142Bc)
- DIAGNOSIS UNIT (142Bd)

141B LEARNING MEANS
- LEARNING TARGET DATA ACQUISITION UNIT (141a)
- VALUE IDENTIFICATION UNIT (141g)
- VALUE STORAGE UNIT (141h)
- CLUSTER LEARNING UNIT (141Bd)
- LEARNING RESULT STORAGE UNIT (141Be)

SENSOR DATA STORAGE MEANS (13)

FUNCTION STORAGE MEANS (18)

DIAGNOSTIC RESULT STORAGE MEANS (15)

# FIG.17

LEARNING PERIOD

DETECTION VALUE

1ST TIME | 2ND TIME

$p_1$

SENSOR DATA

L

$q_1$

b

L

t01 | t02

TIME

$\Delta t_1$

$\Delta t_2$

$\Delta t_3$

# FIG.18

```
                          ┌─────────────┐
                          │    START    │
                          └──────┬──────┘
                                 ▼
               ┌──────────────────────────────────┐
               │              n=1                 │── S301
               └────────────────┬─────────────────┘
                                ▼
               ┌──────────────────────────────────┐
               │   ACQUIRE LEARNING TARGET DATA    │── S302
               └────────────────┬─────────────────┘
                                ▼
               ┌──────────────────────────────────┐
               │     IDENTIFY DETECTION VALUE      │── S303
               │   AT PREDETERMINED TIME Δt_n      │
               └────────────────┬─────────────────┘
                                ▼
               ┌──────────────────────────────────┐
               │    IDENTIFY VALUE OF FUNCTION     │── S304
               │   AT PREDETERMINED TIME Δt_n      │
               └────────────────┬─────────────────┘
                                ▼
               ┌──────────────────────────────────┐
               │      STORE DETECTION VALUE,       │── S305
               │       VALUE OF FUNCTION           │
               └────────────────┬─────────────────┘
                                ▼              S306
                          ◇─────────────◇         No
                         ╱     n=N?      ╲──────────────┐
                          ◇─────────────◇              ▼
                                │ Yes          ┌─────────────────────┐
                                │              │ INCREMENT VALUE OF n │── S307
                                │              └─────────────────────┘
                                ▼                    S308
                  Yes     ◇─────────────◇
          ┌─────────────╱ IS THERE ANY OTHER ╲
          │              ◇ OPERATION PROCESS? ◇
          │                     │ No
          │                     ▼
          │         ┌──────────────────────────────────┐
          │         │          LEARN CLUSTER           │── S309
          │         └────────────────┬─────────────────┘
          │                          ▼
          │         ┌──────────────────────────────────┐
          │         │     STORE RESULT OF LEARNING      │── S310
          │         └────────────────┬─────────────────┘
          │                          ▼
          │                   ┌─────────────┐
          │                   │     END     │
          │                   └─────────────┘
```

# FIG.19

```
          START

            │
            ▼
┌──────────────────────────────┐
│           n＝1               │─── S401
└──────────────────────────────┘
            │
            ▼ ◄──────────────────────────────┐
┌──────────────────────────────┐             │
│  ACQUIRE LEARNING TARGET DATA │─── S402     │
└──────────────────────────────┘             │
            │                                 │
            ▼                                 │
┌──────────────────────────────┐             │
│   IDENTIFY DETECTION VALUE    │─── S403     │
│ AT PREDETERMINED TIME Δtₙ     │             │
└──────────────────────────────┘             │
            │                                 │
            ▼                                 │
┌──────────────────────────────┐             │
│  IDENTIFY VALUE OF FUNCTION   │─── S404     │
│ AT PREDETERMINED TIME Δtₙ     │             │
└──────────────────────────────┘             │
            │                                 │
            ▼                                 │
┌──────────────────────────────┐             │
│ CALCULATE ABNORMALITY MEASURE │─── S405     │
└──────────────────────────────┘             │
            │                                 │
            ▼                                 │
         ◇ S406                              │
       n＝N ?      No                        │
         ◇ ──────────┐                       │
         │           ▼                        │
        Yes   ┌──────────────────────┐ S407   │
         │    │ INCREMENT VALUE OF n │────────┘
         │    └──────────────────────┘
         ▼
┌──────────────────────────────┐
│        MAKE DIAGNOSIS        │─── S408
└──────────────────────────────┘
            │
            ▼
┌──────────────────────────────┐
│   STORE RESULT OF DIAGNOSIS  │─── S409
└──────────────────────────────┘
            │
            ▼
           END
```

Value at predetermined time $\Delta t_n$ (S403, S404).

## FIG.20A

## FIG.20B

# FIG.21

EP 3 333 660 B1

# FIG.22A

# FIG.22B

FIG.23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150160098 A1
- JP 5684941 B
- JP H6259678 A
- US 2015160098 A1